# EUROPÄISCHE PATENTSCHRIFT

(11) **EP 0 886 657 B1**
(45) Veröffentlichungstag und Bekanntmachung des Hinweises auf die Patenterteilung: **01.12.1999**
(21) Anmeldenummer: 97914231.2
(22) Anmeldetag: 12.03.1997
(51) Int. Cl.: C08F 8/32, C08F 8/46, C08L 25/00

(54) **FUNKTIONALISIERTE POLYMERE**
FUNCTIONALIZED POLYMERS
POLYMERES FONCTIONNALISES

(30) Priorität: 15.03.1996 DE 19610362
(43) Veröffentlichungstag der Anmeldung: 30.12.1998
(73) Patentinhaber: BASF AKTIENGESELLSCHAFT, 67056 Ludwigshafen (DE)
(72) Erfinder: WEISS, Robert, D-67281 Kirchheim (DE); GOTTSCHALK, Axel, D-67435 Neustadt (DE)
(74) Vertreter: Isenbruck, Günter, Dr.
(86) Internationale Anmeldenummer: EP9701259
(87) Internationale Veröffentlichungsnummer: WO9734936

(56) Entgegenhaltungen:
- WO-A-90/15086
- DE-A- 19 519 855
- FR-A- 2 402 676
- US-A- 4 145 298
- US-A- 4 948 650
- POLYMER PREPRINTS, Bd. 33, Nr. 2, 1992, Seiten 608-609, XP000676051 I. PARK ET AL.: "reactive compatibilizers for blends of nylon 6 with styrenic polymers"
- POLYMER PREPRINTS, Bd. 33, Nr. 1, 1992, Seiten 944-945, XP000676050 U. VAIDYA ET AL.: "anhydride terminal polystyrene for reactive blending"
- JOURNAL OF POLYMER SCIENCE: PART A: POL. CHEM., Bd. 29, 1991, Seiten 1329-1338, XP002033510 I. PARK ET AL.: "terminal anhydride functionalization of polystyrene" in der Anmeldung erwähnt

## Beschreibung

Die Erfindung betrifft ein funktionalisiertes Polymer der Formel:

A-Z-X

wobei
- A: einen Block aus vinylaromatischen Monomeren mit 8 bis 20, vorzugsweise 8 bis 12 Kohlenstoffatomen,
- Z: einen Grundbaustein aus einer Verbindung mit sterisch hindernden Gruppen und
- X: einen funktionalisierten Grundbaustein
bedeutet, wobei der Funktionalisierungsgrad des Polymers mindestens 65 %, vorzugsweise größer 85 %, besonders bevorzugt mindestens 90%, beträgt.

In Inhapak, J.W. Barlow, und Paul "Terminal Anhydride Functionalization of Polystyrene, J. of Polymer Science, Part A, Polymer Chemistry, Bd. 29, S. 1329 - 1338 (1993) ist die Herstellung von terminal anhydrid-funktionalisiertem Polystyrol beschrieben. Dabei wird Styrol anionisch polymerisiert und das gebildete Polystyryllithium direkt mit Trimellitsäureanhydridchlorid (TMAC) am Ende der anionischen Polymerisation von Styrol gekoppelt. Der Funktionalisierungsgrad des Polymers beträgt maximal 61 % bei dieser direkten Funktionalisierung. Mit TMAC funktionalisierte Polystyrole wurden ebenfalls erhalten durch Umsetzung von hydroxi-terminiertem Polystyrol und TMAC. Bei dieser Umsetzung zur indirekten Funktionalisierung werden Funktionalisierungsgrade bis zu 85 % erreicht. Die Durchführbarkeit dieses Verfahrens hängt jedoch von der Verfügbarkeit von hydroxi-terminiertem Polymer ab, das durch anionische Polymerisation und anschließende Umsetzung mit Ethylenoxid am Ende der Polimerisation zugänglich ist (R.P. Quirk und J.-J. Ma, J. Polym. Sic. Polym. Chem. Ed. 26, 2031 (1988)). Derartig funktionalisierte Polystyrole können zur in-situ-Bildung von Blockcopolymeren in Polymerblends verwendet werden zur Kompatibilisierung der Polymerblendbestandteile.

Die indirekte Funktionalisierung weist den Nachteil auf, daß Ethylenoxid im Verfahren eingesetzt werden muß, das toxikologisch bedenklich ist.

Polymer Preprints 33, Nr 1, Seiten 944 bis 945 (1992) betrifft Polystyrol, das beispielsweise mit TMAC oder PMDA terminiert ist. Zu seiner Herstellung wird zunächst Styrol anionisch polymerisiert. Die Polymerisation wird durch Zugabe von N-(Trimethylsilyl)benzaldimin terminiert, wobei nach Fällen des erhaltenen Polymerproduktes in Methanol ein Polystyrol erhalten wird, daß mit einer Benzylamingruppe terminiert ist. Das so Amin-terminierte Polystyrol wird mit TMAC oder PMDA umgesetzt, um zu einem Anhydrid- terminierten Polystyrol zu gelangen. Das Herstellungsverfahren folgt der in der Fußnote 6 angegebenen Literaturstelle (Polym. Preprints, 31 (2), 502 (1990)). In dieser Literaturstelle wird die Gesamtausbeute für die Anhydridfunktionalisierung mit 87% angegeben (Ausbeute für die Aminfunktionalisierung etwa 90%, Ausbeute für die Anhydridfunktionalisierung etwa 97%). Dieses Polymer wird in Polymer Preprints 33 als einen Anhydridfunktionalisierungsgrad von etwa 90% aufweisend beschrieben. In der Diskussion der Ergebnisse ist angegeben, daß die Anhydridfunktionalisierung im Bereich zwischen 80% und 90% liegt. Es wird zudem ausgeführt, daß bei der Funktionalisierung als Nebenreaktion eine Kopplungsreaktion auftritt, die auf eine Imidbildung durch Reaktion eines Anhydridfunktionalisierten Polystyrols mit einem Amin-funktionalisierten Polystyrol zurückgeführt werden kann.

Verstärkte Blends aus PPE und schlagfestem Styrol, die als Formmassen in vielen Bereichen der Technik eingesetzt werden, sind an sich bekannt. Dabei ist bei vielen Anwendungen eine hohe Reißfestigkeit und Fließfähigkeit des Materials entscheidend.

Aus der DE 31 18 629 A1 sind Formmassen aus Polyphenylenethern und schlagfest modifizierten Styrolpolymerisaten bekannt, die als weitere Komponente ein Polyorganosiloxan enthalten, um der Formmasse eine hohe Fließfähigkeit zu verleihen. Werden diese Formmassen verstärkt, so ist die Steifigkeit der verstärkten Formmasse nicht für alle Anwendungen ausreichend groß.

In der EP-B1 0 214 400 sind Harzzusammensetzungen aus Polyphenylenetherharz und Styrolharz beschrieben, die zusätzlich ein Cyclopentadienharz aufweisen, das eine polare Gruppe enthält, um die Fließfähigkeit der Harzzusammensetzung zu verbessern. Auch in dieser Harzzusammensetzung sind die mechanischen Eigenschaften für viele Anwendungen unbefriedigend.

In der EP-A 0 319 833 sind verstärkte thermoplastische Formmassen beschrieben, die Polyphenylenether, ein schlagzähmodifiziertes Styrolpolymerisat und ein weiteres Copolymerisat aus Styrol und tert.-Butylacrylat enthalten. Das Copolymer aus Styrol und tert.-Butylacrylat dient der Verbesserung der mechanischen Eigenschaften, jedoch weist die Formmasse eine ungenügende Fließrabigkeit auf.

Eine Aufgabe der vorliegenden Erfindung ist die Bereitstellung eines funktionalisierten Polymers aus vinylaromatischen Monomeren, wobei der Funktionalisierungsgrad möglichst groß ist.

Eine weitere Aufgabe der vorliegenden Erfindung ist die Bereitstellung eines funktionalisierten Polymers aus vinylaromatischen Monomeren, wobei die Funktionalisierung keine Ethylenoxidgrundbausteine aufweist.

Eine weitere Aufgabe der vorliegenden Erfindung ist die Bereitstellung eines Verfahrens zur Herstellung der funktionalisierten Polymere mit hohem Funktionalisierungsgrad.

Eine weitere Aufgabe der vorliegenden Erfindung ist die Bereitstellung eines Verfahrens zur Herstellung der funktionalisierten Polymere mit hohem Funktionalisierungsgrad, wobei auf den Einsatz des toxikologisch bedenklichen Ethylenoxids verzichtet wird.

Eine weitere Aufgabe der vorliegenden Erfindung ist die Bereitstellung von verstärkten thermoplastischen Formmassen, die eine große Steifigkeit aufweisen.

Eine weitere Aufgabe der vorliegenden Erfindung ist die Bereitstellung von verstärkten thermoplastischen Formmassen, die eine sehr gute Reißfestigkeit und gleichzeitig Fließfähigkeit aufweisen.

Eine weitere Aufgabe der vorliegenden Erfindung ist die Bereitstellung von thermoplastischen Formmassen, die eine große Steifigkeit aufweisen.

Eine weitere Aufgabe der vorliegenden Erfindung ist die Bereitstellung von thermoplastischen Formmassen, die eine hohe Zähigkeit bzw. Schlagzähigkeit aufweisen.

Eine weitere Aufgabe der vorliegenden Erfindung ist die Bereitstellung eines Verfahrens zur Herstellung dieser (verstärkten) thermoplastischen Formmassen.

Eine weitere Aufgabe der vorliegenden Erfindung ist die Bereitstellung von Formkörpern, die eine gute Steifigkeit und Reißfestigkeit aufweisen.

Diese und weitere Aufgaben werden gelöst durch ein funktionalisiertes Polymer, wie es eingangs definiert ist, durch ein Verfahren zu seiner Herstellung, (verstärkte) thermoplastische Formmassen, Verfahren zu deren Herstellung und Formkörper, wie sie nachstehend definiert sind. Dabei sind auch bevorzugte funktionalisierte Polymere nachstehend beschrieben. Verwendungen des funktionalisierten Polymers und der (verstärkten) thermoplastischen Formmassen sind ebenfalls aufgeführt.

### Funktionalisiertes Polymer (Komponente (a))

Das erfindungsgemäße funktionalisierte Polymer hat die Formel:

A-Z-X

wobei
- A: einen Block aus vinylaromatischen Monomeren mit 8 bis 20, vorzugsweise 8 bis 12 Kohlenstoffatomen,
- Z: einen Grundbaustein aus einer Verbindung mit sterisch hindernden Gruppen und
- X: einen funktionalisierten Grundbaustein
bedeutet, wobei der Funktionalisierungsgrad des Polymers mindestens 65%, vorzugsweise größer 85%, besonders bevorzugt mindestens 90%, beträgt.

Der Block A kann dabei erfindungsgemäß aus einer Art oder mehreren Arten von vinylaromatischen Monomeren aufgebaut sein, d.h. ein Mono- oder Copolymer sein.

Eine Gruppe der erfindungsgemäß für A verwendbaren Monomeren sind Styrolmonomere. Dabei können die Styrolmonomere unsubstituiert sein, oder mit C₁₋₁₂-Alkylresten, vorzugsweise C₁₋₄-Alkylresten, am aromatischen Kern oder an der Vinylgruppe substituiert sein. Es können einer oder mehrere Alkylreste als Substituenten vorliegen, die geradkettig oder verzweigt sein können. Dabei ist es auch möglich, daß sowohl der aromatische Kern (Benzolkern) als auch die Vinylgruppe der Styrolmonomeren substituiert sind.

Beispiele erfindungsgemäß verwendbarer Styrole sind Styrol, α-Methylstyrol, p-Methylstyrol, Vinyltoluol und p-tert.-Butlystyrol, besonders bevorzugt Styrol.

Ebenfalls verwendbar sind vinylaromatische Monomere, die einen mehrkernigen aromatischen Rest an die Vinylgruppe gebunden enthalten. Ein geeigneter Rest ist beispielsweise ein Naphthylrest, der ggf. wie vorstehend beschrieben alkylsubstituiert sein kann.

Z ist ein Grundbaustein einer Verbindung mit sterisch hindernden (räumlich anspruchsvollen) Gruppen.

Die Verbindung ist dabei vorzugsweise ein Vinybnonomer, das mit sterisch hindernden Gruppen zumindest an einem Kohlenstoffatom substituiert ist. Vorzugsweise ist dabei die Vinylgruppe an einem Kohlenstoffatom durch zwei aromatische Reste substituiert, vorzugsweise durch Vinylreste, die wiederum substituiert sein können durch die vorstehend für die Monomere des Blocks A beschriebenen Alkylreste und weiteren Substituenten. An das andere Kohlenstoffatom der Vinylgruppe kann beispielsweise ein Alkylrest gebunden sein, der vorzugsweise 1 - 4 Kohlenstoffatome aufweist und ggf. wiederum wie beschrieben substituiert sein kann. Die mit sterisch hindernden Gruppen substituierte Vinylgruppe weist dabei gemäß einer Ausführungsform der Erfindung insgesamt 14 - 22 Kohlenstoffatome auf.

Somit ist der Grundbaustein Z vorzugsweise eine Diarylalkylengruppe mit 14 bis 22 Kohlenstoffatomen, insbesondere eine 1,1-Diarylethylen-Gruppe der Formel 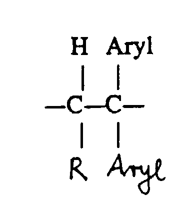 in der R Wasserstoff oder einen Alkylrest mit 1 bis 4 Kohlenstoffatomen und "Aryl" einen Arylrest mit 6 bis 10 Kohlenstoffatomen, vorzugsweise einen Phenylrest, bedeuten.

X ist ein funktionalisierter Grundbaustein. Die funktionelle(n) Gruppe(n) ist/sind gemäß einer Ausführungsform der Erfindung derart ausgestaltet, daß sie eine feste Bindung, insbesondere eine kovalente Bindung, mit einem Verstärkungsmittel, vorzugsweise einer Glasfaser oder silanisierten Glasfaser, in einer Formmasse ausbilden kann, wie sie nachstehend bei den Formmassen beschrieben sind.

Die funktionelle Gruppe, mit der die kovalente Bindung zum Grundbaustein Z erreicht wird, kann eine beliebige dafür geeignete funktionelle Gruppe sein. Vorzugsweise ist sie eine Hydroxylgruppe oder ein Halogenatom, vorzugweise ein Chloratom. Die funktionelle Gruppe X ist vorzugsweise eine Säureanhydridgruppe tragende Kohlenwasserstoffgruppe, insbesondere eine Säureanhydridgruppe tragende Arylgruppe. Die funktionelle Gruppe ist dabei an das Kohlenstoffatom gebunden, das auch die Arylreste trägt. Die funktionelle Gruppe X ist eine Anhydridgruppe oder eine Säureanhydridgruppe. Die Anhydridgruppe und die Säureanhydridgruppe hat vorzugsweise 2 bis 8 Kohlenstoffatome. Bevorzugte Beispiele für die funktionelle Gruppe X sind der von der Trimellitsäure abgeleitete Säureanhydridrest.

Diese funktionelle Gruppe dient gemäß einer Ausführungsform dazu, eine feste Bindung, insbesondere eine kovalente Bindung, mit einem Verstärkungsmittel, vorzugsweise einer Glasfaser oder einer silanisierten Glasfaser in einer Formmasse auszubilden, wie sie nachstehend beschrieben sind. Die mindestens difunktionelle Verbindung bzw. der funktionalisierte Grundbaustein X kann als diese funktionelle Gruppe beispielsweise OH, COOH, COOR, SH, NCO, NH₂ enthalten. Sie enthält vorzugsweise eine NH₂-Gruppe oder eine Säureanhydridgruppe, insbesondere eine Säureanhydridgruppe.

Dabei kann eine den funktionalisierten Grundbaustein X einführende mindestens difunktionelle Verbindung gemäß einer Ausführungsform der Erfindung die Formel 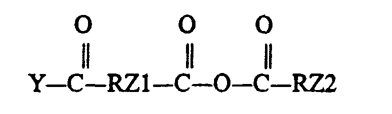 aufweisen, wobei RZ1 und RZ2 jeweils einen Kohlenwasserstoffrest mit vorzugsweise 1 bis 10 Kohlenstoffatomen bedeuten, wobei die Reste RZ1 und RZ2 auch zusammen eine Kohlenwasserstoffringstruktur, insbesondere einen aromatischen Ring, vorzugsweise einen Benzolring, oder einen Cycloalkylring bilden können, wobei die beiden Kohlenstoffatome der Säureanhydridgruppe vorzugsweise an benachbarten Kohlenstoffatomen der Ringstruktur angebunden sind. Der Rest Y ist eine Hydroxylgruppe oder ein Halogenatom, vorzugsweise ein Chloratom. Bevorzugte Beispiele für den funktionalisierten Grundbaustein X sind der von der Trimellitsäure abgeleitete Säureanhydridrest, insbesondere in folgenden Konfigurationen:

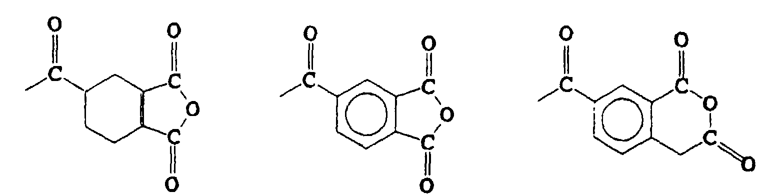

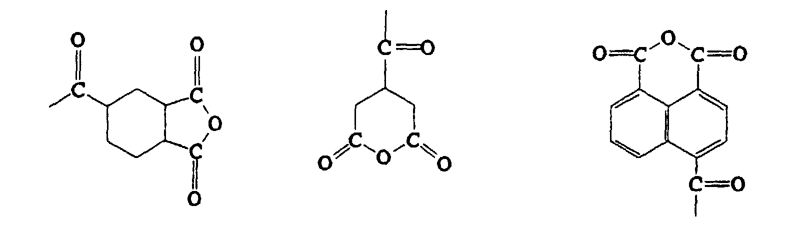

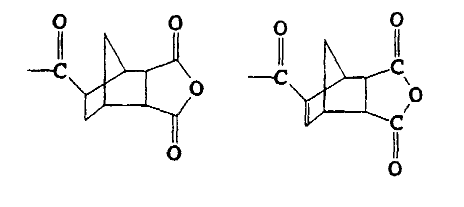

Bevorzugt wird das 1,2-Anhydrid oder 1,2 Anhydridchlorid der 1,2,4-Benzoltricarbonsäure (Trimellitsäure) oder Chlorethanoylbernsteinsäureanhydrid, Chlorformylbernsteinsäureanhydrid oder 1-Acetoxyacetyl-3,4-phthalsäureanhydrid als den Grundbaustein X einführende mindestens difunktionelle Verbindung eingesetzt, besonders bevorzugt ist Trimellitsäureanhydridchlorid. Auch andere Verbindungen, die sowohl eine Säureanhydridfunktion als auch eine Säurehalogenid- oder Säurefunktion aufweisen, sind erfindungsgemäß zur Herstellung des funktionalisierten Polymers verwendbar.

Vorzugsweise enthalten die Grundbausteine Z und X gemäß einer Ausführungsform der Erfindung keine Ethylenoxidgrundbausteine, die in der Hauptkette vorliegen. Das Molekulargewicht (Gewichtsmittel) des funktionalisierten Polymers liegt erfindungsgemäß vorzugsweise im Bereich von 10.000 bis 300.000, insbesondere von 20.000 bis 100.000. Dabei wird das Molekulargewicht mit Hilfe der Gelpermeationschromatographie gegen Polystyroleichstandards bestimmt.

Der Funktionalisierungsgrad des funktionalisierten Polymers wird durch ¹H-NMR bestimmt, ist aber auch durch Potentiometrie oder durch Titration gegen Basen mit geeigneten Indikatoren möglich.

### Herstellung des funktionalisierten Polymers

Es wurde erfindungsgemäß gefunden, daß die funktionalisierten Polymere mit höherem Funktionalisierungsgrad dann erhalten werden, wenn man das lebende Anion des Blocks A zunächst mit sterisch hindernde Gruppen tragenden Verbindungen wie 1,1-Diphenylethylen umsetzt und das erhaltene Produkt mit einer mindestens difunktionellen Verbindung wie Trimellitsäureanhydridchlorid umsetzt. Der Funktionalisierungsgrad, der durch IR-Spektroskopie oder Titration bestimmt werden kann, ist bei diesem Vorgehen vorzugsweise größer 85%, besonders bevorzugt mindestens 90%.

Im Gegensatz zu dem von Park, Barlow und Paul beschriebenen indirekten Funktionalisierungsweg kann auf die Verwendung von Ethylenoxid, das toxikologisch bedenklich ist, verzichtet werden. Im Gegensatz dazu ist das erfindungsgemäß eingesetzte Diphenylethylen toxikologisch unbedenklich.

Ein wie vorstehend beschriebenes funktionalisiertes Polymer kann gemäß einem Verfahren hergestellt werden, wobei
a) vinylaromatische Monomere anionisch zu einem ersten lebenden einen Block A enthaltenden Polymer der Formel A⁻ polymerisiert werden,
b) das erste lebende Polymer mit einer Verbindung mit sterisch hindernden Gruppen zu einem zweiten lebenden Polymer der Formel A-Z^{⊖} umgesetzt wird und
c) das zweite lebende Polymer mit einer mindestens difunktionellen Verbindung zu einem Polymer der Formel A-Z-X umgesetzt wird,
wobei die hier verwendeten Abkürzungen die gleiche Bedeutung wie in den Polymeransprüchen haben.

Anionische Polymerisationsverfahren zur Herstellung des Blocks A sind z.B. in den US-Patentschriften 3,251,905, 3,390,207, 3,598,887 und 4,219,627 ausführlich beschrieben. Als Initiatoren für die Polymerisation eignen sich alkalimetallorganische Verbindungen, vorzugsweise Lithiumalkyle wie z.B. Methyllithium, Ethyllithium, n- oder s-Butyllithium oder Isopropyllithium. Besonders bevorzugt wird n- oder s-Butyllithium eingesetzt.

Auch die Herstellung anderer mono- oder bifunktioneller anionischer Polymerisate ist bekannt und unter anderem bereits in EP 0 303 177, EP 0 295 675, US 4,950,721, DE 36 39 569 und DE 35 37 771 beschrieben.

Als Lösungsmittel für die anionische Polymerisation zur Herstellung der erfindungsgemäßen funktionalisierten Polymere eignen sich vor allem geradkettige oder verzweigte aliphatische Kohlenwasserstoffe, wie z.B. n-Octan oder n-Hexan, sowie einfache oder substituierte cycloaliphatische und aromatische Kohlenwasserstoffe wie z.B. Cyclohexan, Methylcyclohexan oder Toluol, Benzol sowie jede beliebige Mischung der aliphatischen, cycloaliphatischen und aromatischen Kohlenwasserstoffe. Vorzugsweise wird Cyclohexan als Lösungsmittel verwendet.

Als Lösungsmittelkomponenten sind ferner Ether wie Tetrahydrofuran oder Diethylether sowie tertiäre Amine wie z.B. Tetramethylethylendiamin oder Pyridin in Konzentrationen von 0,01 bis 20, vorzugsweise 0,01 bis 2 Gew.-% geeignet. Bevorzugt ist Tetrahydrofuran.

Alle Einsatzstoffe müssen von sauerstoff- und protonenaktiven Verunreinigungen befreit werden, was z.B. durch Kontaktieren mit Metallorganylen oder durch adsorptive Reinigung, z.B. Calciumhydrid erfolgen kann. Die Durchführung der Polymerisation erfolgt vorzugsweise unter Inertgasbedingungen bei Temperaturen von -100 bis +120 °C, vorzugsweise bei -80 bis +80 °C.

Gemäß einer Ausführungsform der vorliegenden Erfindung können erfindungsgemäße Polymere dadurch hergestellt werden, daß zunächst durch anionische Polymerisation, vorzugsweise unter Einsatz von Lithium-Initiatoren, insbesondere Alkyllithium, speziell bevorzugt n-Butyllithium und sekundärem Butyllithium, die Grundstruktur

A-Li

als "lebendes" Polymer in an sich bekannter Weise erzeugt wird. Dieses "lebende" Polymer wird dann in einer zweiten Stufe durch Umsetzen mit einem Molekül einer Verbindung der Formel 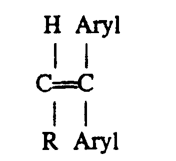 unter Herstellung eines zweiten lebenden Polymers 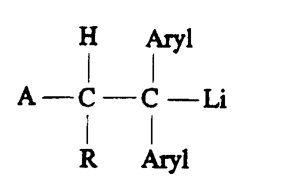 umgesetzt. Dieses weitere lebende Polymer wird schließlich in einer weiteren Stufe mit einer mindestens difunktionellen Verbindung umgesetzt, die einen funktionalisierten Grundbaustein X einführt. Dabei dient eine funktionelle Gruppe zur Ermöglichung der kovalenten Bindung des Grundbausteins X an Z, und mindestens eine weitere funktionelle Gruppe stellt die Funktionalisierung des Grundbausteins und somit des Polymers bereit. Weist die mindestens difunktionelle Verbindung dabei beispielsweise erfindungsgemäß eine Hydroxylgruppe oder ein Halogenatom, vorzugsweise ein Chloratom, vorzugsweise in einer Säure- oder Säurechloridgruppe, als funktionelle Gruppe auf, die die Bindung an den Grundbaustein Z ermöglicht, so wird unter Ausbildung einer kovalenten Bindung zwischen dem Grundbaustein Z und dem funktionalisierten Grundbaustein X ein Halogenidion oder ein OH⁻-Ion abgespalten. Dabei entsteht das ungeladene funktionalisierte Polymer der Erfindung, dessen Funktionalisierung wie vorstehend beschrieben ist.

Die einzelnen Stufen des erfindungsgemäßen Verfahrens werden vorzugsweise unter folgenden Bedingungen durchgeführt:
(a) Die Polymerisation von Vinylaromat mit Lithium-Initiator wird bei Temperaturen von -100 °C bis 100 °C, vorzugsweise von -20 °C bis 80 °C, durchgeführt.
(b) Die Umsetzung des lebenden Polymers mit CHR=CAryl₂ erfolgt ebenfalls bei Temperaturen von -100 °C bis 100 °C, vorzugsweise von -20 °C bis 80 °C.
(c) Die Einführung der funktionellen Gruppe in das weitere lebende Polymer unter Abspaltung des Lithium wird im Temperaturbereich von -100 °C bis 50 °C, vorzugsweise von -20 °C bis 30 °C, vorgenommen.

Das Polymerisationsgemisch kann zur Isolierung des Polymeren nach bekannten Verfahren wahlweise direkt zur Trocknung erhitzt oder mit Wasserdampf behandelt werden, wobei das Lösungsmittel abdestilliert wird. Es kann gleichfalls in einem Überschuß Nichtlösungsmittel wie z.B. Ethanol gefällt und mechanisch abgetrennt und getrocknet oder durch Extruderentgasung aufgearbeitet werden.

Die Aufarbeitung des Reaktionsgemisches erfolgt beispielsweise durch Ausfällung des funktionalisierten Polymers mit Petrolether, Absaugen und Trocknen des Niederschlags.

Gemäß einer Ausführungsform der Erfindung weist das funktionalisierte Polymer einen Block A aus vinylaromatischen Monomeren auf, der mit Polyphenylenether und Polystyrol kompatibel bzw. verträglich ist. Unter der Verträglichkeit zweier Polymerkomponenten versteht man im allgemeinen die Mischbarkeit der Komponenten oder die Neigung des einen Polymeren, sich in der anderen Polymerkomponente zu lösen (siehe B. Vollmert, Grundriß der Makromolekularen Chemie, Band IV, S. 222 ff, E. Vollmert Verlag, 1979). Zwei Polymere sind um so besser verträglich, je geringer die Differenz ihrer Löslichkeitsparameter ist. Derartige Parameter sowie die Mischungsenthalpie sind nicht einheitlich für alle Polymere bestimmbar, so daß die Löslichkeit nur indirekt, z.B. durch Torsions-Schwingungs- oder DTA-Messungen bestimmbar ist. Beispiele für bevorzugte, mit Polyphenylenethern verträgliche vinylaromatische Polymere sind der Monografie von O. Olabisi, Polymer-Polymer Miscibility, 1979, S. 224 bis 330 und 245 zu entnehmen. Dabei ist der funktionalisierte Grundbaustein X fähig, eine Bindung mit Verstärkungsmitteln wie Glasfaser oder melanisierten Glasfasern einzugehen, um diese fest zu binden. Dadurch kann das funktionalisierte Polymer in Polyphenylenether/Polystyrol-Gemischen oder Blends verwendet werden, die ggf. Verstärkungsmittel enthalten, und kann zur Herstellung von, ggf. verstärkten, thermoplastischen Formmassen dienen.

### Thermoplastische Formmassen, Polyphenylenether enthaltend

Die Aufgaben der vorliegenden Erfindung werden durch die in den Ansprüchen beschriebene, gemäß einer Ausführungsform verstärkte, thermoplastische Formmasse gelöst, die Polyphenylenether enthält. Diese ist gekennzeichnet durch
(a) 0,1 bis 20 Gew.-% mindestens eines funktionalisierten Polymers, wie es in einem der Polymeransprüche definiert ist,
(b) 1 bis 98,9 Gew.-% mindestens eines Polyphenylenethers,
(c) 1 bis 98,9 Gew.-% mindestens eines vinylaromatischen Polymers,
(d) 0 bis 50 Gew.-% mindestens eines Verstärkungsmittels, und
(e) 0 bis 60 Gew.-% weiterer Zusatzstoffe und/oder Verarbeitungshilfsmittel,
wobei Mengen der Komponenten (a) bis (e) gemeinsam 100 Gew.-% ergeben.

Vorzugsweise enthalten die erfindungsgemäßen, ggf. verstärkten, thermoplastischen Formmassen 0,2 - 15 Gew.-%, insbesondere 0,5 - 10 Gew.-%, der Komponente (a), 1 - 97,9 Gew.-%, besonders bevorzugt 20 - 89,9 Gew.-%, insbesondere 35 - 79,5 Gew.-%, der Komponente (b), 1 - 97,9 Gew.-%, besonders bevorzugt 5 - 60 Gew.-%, insbesondere 10 - 45 Gew.-%, der Komponente (c), 1 - 50 Gew.-%, besonders bevorzugt 5 - 45 Gew.-%, insbesondere 10 - 40 Gew.-%, der Komponente (d) und 0 - 30 Gew.-%, insbesondere 0 - 20 Gew.-%, der Komponente (e).

Dabei ergeben die Mengen der Komponenten (a) - (e) immer gemeinsam 100 Gew.-%.

Die einzelnen Komponenten sind nachstehend näher erläutert.

### Polyphenylenether der Komponente (b)

Der Polyphenylenether der Komponente (b) liegt in den erfindungsgemäßen verstärkten thermoplastischen Formmassen in einer Menge von 1 bis 98,9 Gew.-%, vorzugsweise 1 bis 97,9 Gew.-%, besonders bevorzugt 20 bis 89,9 Gew.-%, insbesondere 40 bis 79,5 Gew.-% vor, bezogen auf die verstärkte thermoplastische Formmasse. Die in den erfindungsgemäßen Formmassen enthaltenen Polyphenylenether (b) sind an sich bekannt. Sie werden nach üblichen Verfahren aus in ortho-Position durch Alkylgruppen, Alkoxygruppen, Chlor- oder Brom-disubstituierten Phenolen durch oxidative Kopplung hergestellt (vgl. US-Patente 3,661,848, 3,378,505, 3,306,874, 3,306,875, 3,639,656). Die Alkyl- oder Alkoxygruppen, die bevorzugt 1 bis 4 C-Atome, aber kein alpha-ständiges tertiäres Wasserstoffatom enthalten, können ihrerseits durch Chlor oder Brom substituiert sein. Geeignete Polyphenylenether sind beispielsweise Poly-2,6-diethyl-1,4-phenylenether, Poly-2-methyl-6-ethyl-1,4-phenylenether, Poly-2-methyl-6-propyl-1,4-phenylenether, Poly-2,6-dipropyl-1,4-phenylenether, Poly-2-ethyl-6-propyl-1,4-phenylenether, Poly-2,6-dichlor-1,4-phenylenether und Poly-2,6-dibrom-1,4-phenylenether oder Copolymere, wie solche, die 2,3,6-Trimethylphenol enthalten, außerdem Polymermischungen. Bevorzugt ist Poly-2,6-dimethyl-1,4-phenylenether. Die Polyphenylenether weisen im allgemeinen eine relative Viskosität von 0,3 bis 0,7 dl/g, gemessen in 1 Gew.-%-iger Lösung in Chloroform bei 25 °C auf.

Vorzugsweise werden solche Polyphenylenether eingesetzt, die mit vinylaromatischen Polymeren verträglich, d.h. ganz oder weitestgehend in diesen Polymeren löslich sind (vgl. A. Noshay, Block Copolymers, S. 8 bis 10, Academic Press, 1977 und O. Olabisi, Polymer-Polymer Miscibility, 1979, S. 117 bis 189).

Als Polyphenylenether-Komponente (b) können auch Pfropfcolymere aus Polyphenylenether und vinylaromatischen Polymeren wie Styrol, Alpha-Methylstyrol, Vinyltoluol und Chlorstyrol verwendet werden.

Im Rahmen der vorliegenden Erfindung können modifizierte Polyphenylenether eingesetzt werden, wie sie z.B. aus der WO 86/2086, WO 87/0540, EP-A 222 246, EP-A 223 116 und EP-A 254 048 bekannt sind.

### Vinylaromatische Polymere der Komponente (c)

Die vinylaromatischen Polymere werden erfindungsgemäß in Mengen von 1 bis 98,9 Gew.-%, vorzugsweise 1 bis 97,9 Gew.-%, besonders bevorzugt 5 bis 60 Gew.-%, insbesondere 10 bis 45 Gew.-% verwendet, bezogen auf die verstärkte thermoplastische Formmasse.

Vinylaromatische Polymere, insbesondere Polystyrole der Komponente (c) sind an sich bekannt, beispielsweise aus EP-A-0 319 833.

Als vinylaromatische Polymere kommen beispielsweise alle üblichen Homo- und Copolymerisate des Styrols in Betracht. Üblicherweise liegen die Molekulargewichte der gebräuchlichen Styrolpolymerisate (Gewichtsmittel M_{W}) zwischen 150000 und 300000. Geeignete Styrolpolymerisate werden überwiegend aus Styrol, ferner aus mit C₁₋₄-Alkyl-Kern- oder Seitenketten-alkylierten Styrolen wie Alpha-Methylstyrol oder p-Methylstyrol nach den bekannten Verfahren in Masse, Lösung oder Suspension hergestellt (vgl. Ullmanns Enzyklopädie der technischen Chemie, Band 19, S. 265 bis 272, Verlag Chemie, Weinheim 1980).

Die vinylaromatischen Polymere der Komponente (c) können auch schlagzähmodifiziert sein durch Zumischen von geringen Mengen, vorzugsweise von 2 bis 20 Gew.-%, bezogen auf das Styrolpolymerisat, eines Acrylatkautschuks oder eines Polymerisates eines konjugierten Diens wie Butadien oder Isopren erreicht werden. Die Dienpolymerisate können teilweise oder vollständig hydriert sein. Der Kautschuk bzw. das Dienpolymerisat sollten eine Glastemperatur von unter 0 °C, gemessen nach K.H. Illers und H. Breuer, Kolloidzeitschrift 176 (1961), S. 110, aufweisen. Geeignet sind übliche Kautschuke wie Polybutadienkautschuk, Acrylatkautschuk, Styrolbutadienkautschuk, hydrierter Styrolbutadienkautschuk, Acrylnitrilbutadienkautschuk, Polyisoprenkautschuk, Ionomere, Styrolbutadienblockcopolymere einschließlich AB-, ABA-, ABAB-verschmiert (taper) Block-Copolymere, Stern-Block-Copolymere und ähliche, analoge Isoprenblockcopolymerisate und insbesondere (teil-) hydrierte Blockcopolymere, wie sie an sich aus EP-A-62 283 bekannt sind. Derartige synthetische Kautschuke sind dem Fachmann geläufig und zusammenfassend neben den nicht geeigneten EPDM-Kautschuken in "Ullmanns Enzyklopädie der technischen Chemie", 4. Auflage, Band 13, S. 595 bis 634, Verlag Chemie GmbH, 1977, beschrieben.

Die Schlagzähmodifizierung kann in bevorzugter Weise auch dadurch erreicht werden, daß die Styrolpolymerisate in Gegenwart kleinerer Mengen z.B. 2 bis 20 Gew.-%, bezogen auf das Styrolpolymerisat, eines kautschukartigen Polymerisates auf Basis eines konjugierten Diens, ggf. eines Acrylatkautschuks, hergestellt werden (HIPS). Dabei sind kautschukartige Polymerisate auf der Basis von Butadien, z.B. Styrol-Butadien-Polymerisate, Polybutadien und ferner Butadien-Styrol-Block-Copolymerisate geeignet.
Diese in bestimmter Weise schlagzähmodifizierten Styrolpolymerisate sind dem Fachmann aus der Literatur und Praxis geläufig, so daß an dieser Stelle eine nähere Erläuterung überflüssig erscheint (vgl. "Ullmanns Enzyklopädie der technischen Chemie", 4. Auflage, Band 19, S. 272 bis 295, Verlag Chemie GmbH, 1980).

Geeignete schlagfeste Polystyrole sind beispielsweise in der DE 31 18 629 Al beschrieben, wie auch Verfahren zu ihrer Herstellung.

### Verstärkungsmittel der Komponente (d)

Die Polyphenylenether enthaltenden Formmassen können gemäß einer Ausführungsform der Erfindung frei sein von Verstärkungsmitteln.

Gemäß einer weiteren Ausführungsform der Erfindung enthalten die Polyphenylenether enthaltenden Formmassen jedoch ein Verstärkungsmittel. Diese Ausführungsform wird nachstehend beschrieben.

Die Verstärkungsmittel werden dabei erfindungsgemäß in Mengen von 1 bis 50 Gew.-%, vorzugsweise 5 - 45 Gew.-%, insbesondere 10 - 40 Gew.-%, bezogen auf die verstärkte thermoplastische Formmasse, verwendet.

Die erfindungsgemäßen Formmassen enthalten als Komponente (d) übliche Verstärkungsmaterialien, wie Glasfasern, Glaskugeln, Mineralfasern, Aluminiumoxidfasern, Kohlenstoffasern, Kaliumtitanatwhisker, Aramidfasern. Bevorzugt sind Kohlenstoffasern, Kaliumtitanatwhisker, Aramidfasern und Glasfasern, insbesondere Glasfasern.

Die Glasfasern können aus E-, A- oder C-Glas sein. Ihr Durchmesser liegt im allgemeinen zwischen 6 und 20 µm. Es können sowohl strangförmige Endlosfasern (Rowings) als auch Schnittglasfasern mit einer Länge von 1 bis 10 mm, vorzugsweise 3 bis 6 mm oder Kurzglasfasern mit einer Länge von 0,05 bis 1,5 mm verwendet werden.

Gemäß einer Ausführungsform der vorliegenden Erfindung sind die Verstärkungsmittel der Komponente (d) unbehandelt.

Gemäß einer weiteren bevorzugten Ausführungsform der Erfindung sind die Verstärkungsmittel der Komponente (d) beschichtet bzw. geschlichtet. Diese Schicht bzw. Schlichtung bedeckt die Verstärkungsmittel der Komponente (d), insbesondere die Glasfasern, vorzugsweise gleichmäßig auf der gesamten Oberfläche.

Die Beschichtung bzw. Schlichte ist gemäß einer Ausführungsform der Erfindung eine Silanverbindung. Geeignete Silanverbindungen sind solche der allgemeinen Formel

(X-(CH₂)ₙ)_{K}-Si-(O-CₘH₂ₘ₊₁)_{4-K}

in der die Substituten folgende Bedeutung haben:
- X: NH₂-; 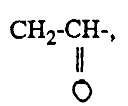 HO-,
- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im allgemeinen in Mengen von 0,05 bis 5, vorzugsweise 0,5 bis 1,5 und insbesondere 0,8 bis 1 Gew.-% (bezogen auf die Verstärkungsmittel der Komponente (d)) zur Oberflächenbeschichtung eingesetzt.

Die beschichteten bzw. geschlichteten Verstärkungsmittel der Komponente (d), vorzugsweise die beschichteten bzw. wie vorstehend geschlichteten Glasfasern sind besonders gut umsetzbar mit dem funktionalisierten Polymer der Komponente (a). Dadurch wird eine feste Bindung zwischen dem funktionalisierten Polymer der Komponente (a) und dem Verstärkungsmittel (d), insbesondere der Glasfaser erreicht. Da der Polymerblock A des funktionalisierten Polymers verträglich ist mit dem Polyphenylenether der Komponente (b) und dem vinylaromatischen Polymer der Komponente (c) werden die Verstärkungsmittel der Komponente (d) gut in den erfindungsgemäßen Formmassen verteilt und sind innig mit diesen verbunden, was zu einer verbesserten Reißfestigkeit und einem hohen Elastizitätsmodul führt.

### Zusatzstoffe und Verarbeitungshilfsmittel der Komponente (e)

Die als Komponente (e) verwendeten üblichen Zusatzstoffe und/oder Verarbeitungshilfsmittel werden in Mengen von 0 bis 60 Gew.-%, vorzugsweise 0 bis 30 Gew.-%, insbesondere 0 - 20 Gew.-%, bezogen auf die verstärkte thermoplastische Formmasse, verwendet.

Als übliche Zusatzstoffe und Verarbeitungshilfsmittel kommen vor allem teilchenförmige Füllstoffe, Oxidationsinhibitoren, Flammschutzmittel, übliche Hitze- und Lichtstabilisatoren, Gleit- und Entformungsmittel, Färbemittel, Farbstoffe, Weichmacher und Pigmente in üblichen Mengen in Betracht. Zudem können den erfindungsgemäßen verstärkten Formmassen andere als die genannten Polymerisate, z.B. auf vinylaromatischer Basis, Polyamide, wie sie z.B. nachstehend als Komponente (f) beschrieben sind, und/oder Kautschuke zugesetzt werden.

Teilchenförmige Füllstoffe als Bestandteile der Komponente (e) werden bevorzugt aus folgender Gruppe ausgewählt: amorphe Kieselsäure, Magnesiumcarbonat, gepulverter Quarz, Glimmer, Talkum, Feldspat, Wollastonit, Kaolin, insbesondere kalzinierter Kaolin.

Bevorzugte Kombinationen von Komponenten (d) und (e) sind z.B. 20 Gew.-% Glasfasern mit 15 Gew.-% Wollastonit und 15 Gew.-% Glasfasern mit 15 Gew.-% Wollastonit. Dabei sind die Gewichtsprozentangaben jeweils auf die gesamten Komponenten (a) bis (e) bezogen.

Bevorzugt sind schließlich auch verstärkte thermoplastische Formmassen, die als Teile der Komponente (e) Flammschutzmittel aus folgender Gruppe enthalten: Polyhalogendiphenyl, Polyhalogendiphenylether, Polyhalogenphthalsäure und deren Derivate, Polyhalogenoligocarbonate, Polyhalogenpolycarbonate, Phosphorverbindungen.

Beispiele für Flammschutzmittel sind Polymere des 2,6,2',6'-Tetrabrombisphenols A, der Tetrabromphthalsäure, des 2,6-Dibromphenols und 2,4,6-Tribromphenols und deren Derivate.

Bevorzugtes Flammschutzmittel ist elementarer Phosphor. In der Regel kann der elementare Phosphor mit z.B. Polyurethanen oder Aminoplasten phlegmatisiert oder gecoatet werden. Außerdem sind Konzentrate von rotem Phosphor z.B. in einem Polyamid, Elastomeren oder Polyolefin geeignet. Besonders bevorzugt sind Kombinationen von elementarem Phosphor mit 1,2,3,4,7,8,9,10,13,13,14,14-Dodecachloro-1,4,4a,5,6,6a,7,10,10a,-11,12,12a-dodecahydro-1,4:7,10-dimethanodibenzo(a,e)-cyclooctan und gegebenenfalls einem Synergisten z.B. Antimontrioxid.

Phosphorverbindungen wie organische Phosphate, Phosphonate, Phosphinate, Phosphinoxide, Phosphine oder Phosphite sind ebenfalls bevorzugt. Als Beispiel seien Triphenylphosphinoxid und Triphenylphosphat und Resorcinolbistriphenyl-phosphinoxid genannt. Dieses kann allein oder vermischt mit Hexabrombenzol oder einem chlorierten Biphenyl und, wahlweise, Antimonoxid verwendet werden.

Typisch für die bevorzugten Phosphorverbindungen, die gemäß der vorliegenden Erfindung verwendet werden können, sind solche der folgenden allgemeinen Formel 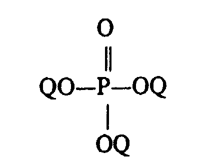 worin Q für gleiche oder verschiedene Reste, Kohlenwasserstoffreste, wie Alkyl, Cycloalkyl, Aryl, alkylsubstituiertes Aryl und arylsubstituiertes Alkyl steht, ferner Halogen, Wasserstoff und deren Kombinationen, vorausgesetzt, daß mindestens einer der für Q stehenden Reste ein Arylrest ist.

Beispiele solcher geeigneter Phosphate sind: Phenylbisdodecylphosphat, phenylbisneopentylphosphat, Phenylethylenhydrogenphosphat, Phenyl-bis-(3-5,5'-trimethylhexylphosphat, Ethyldiphenylphosphat, 2-Ethylhexyldi(p-to-lyl)phosphat, Bis-(2-ethylhexyl)phenylphosphat, Tri(nonylphenyl)phosphat, Phenylmethylhydrogenphosphat, Di(dodecyl)-p-tolylphosphat, Tricresylphosphat, Triphenylphosphat, Dibutylphenylphosphat und Diphenylhydrogenphosphat. Die bevorzugten Phosphate sind solche, bei denen jedes Q Aryl ist. Das am meisten bevorzugte Phosphat ist Triphenylphosphat, Triphenylphosphinoxid und Phenyl-bis-triphenyl phosphinoxid.

Weiter ist die Kombination von Triphenylphosphat mit Hexabrombenzol und Antimontrioxid bevorzugt.

Als Flammschutzmittel sind auch solche Verbindungen geeignet, die Phosphor-Stickstoff-Bindungen enthalten, wie Phosphornitrilchlorid, Phosphorsäureesteramide, Phosphorsäureesteramine, Phosphorsäureamide, Phosphonsäureamide, Phospmmäureamide, Tris(aziridinyl)-phosphinoxid oder Tetrakis(hydroxymethyl)phosphoniumchlorid. Diese entflammungshemmenden Additive sind größtenteils im Handel erhältlich.

Weitere geeignete Flammschutzmittel sind Hydroxide des Magnesiums, welche gegebenenfalls mit Silanverbindungen beschichtet sind.

Weitere halogenhaltige Flammschutzmittel sind Tetrabrombenzol, Hexachlorbenzol und Hexabrombenzol sowie halogenierte Polystyrole und Polyphenylenether.

Auch die in der DE 19 46 924 beschriebenen halogenierten Phthalimide können verwendet werden. Von diesen hat insbesondere N,N'-Ethylenbistetrabromphthalimid Bedeutung erlangt.

Oxidationsverzögerer und Wärmestabilisatoren, die den thermoplastischen Massen gemäß der Erfindung zugesetzt werden können, sind z.B. Halogenide von Metallen der ersten Gruppe des Periodensystems, z.B. Natrium-, Kalium- oder Lithiumhalogenide, ggf. in Verbindung mit Kupfer-(I)-halogeniden, z.B. Chloriden, Bromiden oder Iodiden. Weiterhin können Zinkfluorid und Zinkchlorid verwendet werden. Ferner sind sterisch gehinderte Phenole, Hydrochinone, substituierte Vertreter dieser Gruppe und Mischungen dieser Verbindungen, vorzugsweise in Konzentrationen bis zu 1 Gew.-%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.-%, eingesetzt werden.

Materialien zur Erhöhung der Abschirmung gegen elektromagnetische Wellen wie Metallflocken, -pulvern, -fasern, metallbeschichtete Füllstoffe können ebenfalls mitverwendet werden.

Unter den Zusatzstoffen sind auch Stabilisatoren, die die Zersetzung des roten Phosphors in Gegenwart von Feuchtigkeit und Luftsauerstoff verhindern. Als Beispiele seien Verbindungen des Cadmiums, Zinks, Aluminiums, Silbers, Eisens, Kupfers, Antimons, Zinns, Magnesiums, Mangans, Vanadiums, Bors, Aluminiums und Titans genannt. Besonders geeignete Verbindungen sind z.B. Oxide der genannten Metalle, ferner Carbonate oder Oxicarbonate, Hydroxide sowie Salze organischer oder anorganischer Säuren wie Acetate oder Phosphate bzw. Hydrogenphosphate und Sulfate.

Als bevorzugten Stabilisator können die erfindungsgemäßen Formmassen mindestens eine phosphorhaltige anorganische Säure oder deren Derivate in Mengen bis zu 1.000 bevorzugt 30 bis 200 und insbesondere 50 bis 130 ppm, bezogen auf den Phosphorgehalt der Verbindungen, enthalten.

Bevorzugte Säuren sind hypophosphorige Säure, phosphorige Säure oder Phosphorsäure sowie deren Salze mit Alkalimetallen, wobei Natrium und Kalium besonders bevorzugt sind. Unter organischen Derivaten dieser Säuren sollen vorzugsweise Esterderivate oben genannter Säuren mit Fettsäuren verstanden werden, wobei die Fettsäuren 12 bis 44 Kohlenstoffatome, bevorzugt 22 bis 40 Kohlenstoffatome aufweisen. Als Beispiele seien Stearinsäure, Behensäure, Palmitinsäure oder Montansäure genannt.

Weiterhin können organische Farbstoffe wie Nigrosin, Pigmente wie Titandioxid, Cadmiumsulfid, Cadmiumselenid, Phthalocyanine, Ultramarinblau und Ruß als Farbstoffe zugesetzt werden.

Gleit- und Entformungsmittel, welche üblicherweise in Mengen bis zu 1 Gew.-% eingesetzt werden, sind bevorzugt langkettige Fettsäuren (z.B. Stearinsäure oder Behensäure), deren Salze (z.B. Ca- oder Zn-stearat) oder Esterderivate (z.B. Stearylstearat oder Pentaerythrittetrastearat) sowie Amidderivate (z.B. Ethylen-bis-stearylamid).

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid und o- und p-Tolylethylsulfonamid genannt.

### Kautschuk

Als Kautschuk werden Polymere bezeichnet, die die Schlagzähigkeit von polyphenylenethern und/oder von Polyamiden erhöhen. Dabei ist im konkreten Fall der als Komponente verwendete Kautschuk von den verwendeten anderen Komponenten (a), (b), (c), (d) und (f) verschieden. Geeignete Kautschuke, die die Zähigkeit von Polyphenylenethern erhöhen, sind:

Polyoctenylene, Pfropfkautschuke mit einem vernetzten, elastomeren Kern, der beispielsweise von Butadien, Isopren oder Alkylacrylaten abgeleitet ist und einer Pfropfhülle aus Polystyrol, weiterhin Copolymere aus Ethylen und Acrylaten bzw. Methacrylaten sowie die sogenannten Ethylen-Propylen (EP)- und Ethylen-Propylen-Dien (EPDM)-Kautschuke, ferner die mit Styrol gepfropften EP- bzw. EPDM-Kautschuke.

Ferner können Blockcopolymere mit bis zu sechs, vorzugsweise mit bis zu vier gleichen oder unterschiedlichen Blöcken, die sowohl linear als auch sternförmig (sogenannte Radialblockcopolymere) verbunden sein können, eingesetzt werden.

Mischungen aus Blockcopolymeren verschiedener Strukturen, z.B. Mischungen aus Zwei- und Dreiblockcopolymeren oder aus hydrierten und unhydrierten Blockcopolymeren, können ebenfalls eingesetzt werden.

Durch Zugabe der genannten Kautschuke schlagzäh modifizierte Polymere sind an sich bekannt und in der Literatur beschrieben. Nur beispielsweise sei hier auf US 4,085,163, US 41,103, US 3,149,182, US 3,231,635 und US 3,462,162 verwiesen. Auch im Handel sind entsprechende Produkte erhältlich.

Kautschuke, die die Zähigkeit von Polyamiden erhöhen, weisen im allgemeinen zwei wesentliche Merkmale auf: sie enthalten einen elastomeren Anteil, der eine Glastemperatur von weniger als -10°C, vorzugsweise von weniger als -30°C aufweist und sie enthalten mindestens eine funktionelle Gruppe, die mit dem Polyamid reagieren kann. Geeignete funktionelle Gruppen sind beispielsweise Carbonsäure-, Carbonsäureanhydrid-, Carbonsäureester-, Carbonsäureamid-, Carbonsäureimid-, Amino-, Hydroxyl-, Epoxid-, Urethan- und Oxazolingruppen.

Als Kautschuke, die die Zähigkeit von Polyamiden erhöhen, seien z.B. folgende genannt:

EP- bzw. EPDM-Kautschuke, die mit den oben genannten funktionellen Gruppen gepfropft wurden. Geeignete Pfropfreagenzien sind beispielsweise Maleinsäureanhydrid, Itaconsäure, Acrylsäure, Glycidylacrylat und Glycidylmethacrylat. Diese Monomeren können in der Schmelze oder in Lösung, gegebenenfalls in Gegenwart eines Radikalstarters wie Cumolhydroperoxid auf das Polymer aufgepfropft werden.

Weiterhin seien Copolymere von α-Olefinen genannt. Bei den α-Olefinen handelt es sich üblicherweise um Monomere mit 2 bis 8 Kohlenstoffatomen, vorzugsweise Ethylen und Propylen. Als Comonomere haben sich Alkylacrylate oder Alkylmethacrylate, die sich von Alkoholen mit 1 bis 8 Kohlenstoffatomen, vorzugsweise von Ethanol, Butanol oder Ethylhexanol, ableiten sowie reaktive Comonomere wie Acrylsäure, Methacrylsäure, Maleinsäure, Maleinsäureanhydrid oder Glycidyl(meth-)acrylat und weiterhin Vinylester, insbesondere Vinylacetat, als geeignet erwiesen. Mischungen verschiedener Comonomere können ebenfalls eingesetzt werden. Als besonders geeignet haben sich Copolymere des Ethylens mit Ethyl- oder Butylacrylat und Acrylsäure und/oder Maleinsäureanhydrid erwiesen.

Die Copolymere können in einem Hochdruckprozeß bei einem Druck von 400 bis 4.500 bar oder durch Pfropfen der Comonomere auf das Poly-α-Olefin hergestellt werden. Der Anteil des α-Olefins an dem Copolymer liegt im allgemeinen im Bereich von 99,95 bis 55 Gew.%.

Als weitere Gruppe von geeigneten Elastomeren sind Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glastemperatur von mindestens 25°C, unter einem weichen Bestandteil ein Polymerisat mit einer Glastemperatur von höchstens 0°C. Diese Produkte weisen eine Struktur aus einem Kern und mindestens einer Schale auf, wobei sich die Struktur durch die Reihenfolge der Monomerzugabe ergibt. Die weichen Bestandteile leiten sich im allgemeinen von Butadien, Isopren, Alkylacrylaten oder Alkylmethacrylaten und gegebenenfalls weiteren Comonomeren ab. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich im allgemeinen von Styrol, α-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Propfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen, erfolgt hierbei vorzugsweise durch den Zusatz geeigneter funktionalisierter Monomere bei der Polymerisation der letzten Schale. Geeignete funktionalisierte Monomere sind beispielsweise Maleinsäure, Maleinsäureanhydrid, Mono- oder Diester der Maleinsäure, tert.-Butyl(meth-)acrylat, Acrylsäure, Glycidyl(meth)acrylat und Vinyloxazolin. Der Anteil an Monomeren mit funktionellen Gruppen beträgt im allgemeinen 0,1 bis 25 Gew.%, vorzugsweise 0,25 bis 15 Gew.%, bezogen auf das Gesamtgewicht des Kern-Schale-Pfropfkautschuks. Das Gewichtsverhältnis von weichen zu harten Bestandteilen beträgt im allgemeinen 1:9 bis 9:1, bevorzugt 3:7 bis 8:2.

Derartige Kautschuke, die die Zähigkeit von Polyamiden erhöhen, sind an sich bekannt und beispielsweise in der EP 0 208 187 beschrieben.

Selbstverständlich können auch Mischungen verschiedener Kautschuke eingesetzt werden.

### Herstellung der thermoplastischen Formmassen

Die erfindungsgemäßen, gemäß einer Ausführungsform verstärkten, thermoplastischen Formmassen können nach an sich bekannten Verfahren hergestellt werden, indem man die Ausgangskomponenten in üblichen Mischvorrichtungen wie Schneckenextruder, vorzugsweise Zweischneckenextruder, Brabender-Mühlen oder Banbury-Mühlen mischt und anschließend extrudiert. Nach der Extrusion wird das Extrudat abgekühlt und zerkleinert.

Um eine möglichst homogene Formmasse zu erhalten, ist eine intensive Durchmischung vorteilhaft. Die erfindungsgemäßen Formmassen werden üblicherweise wie nachstehend beschrieben hergestellt:

Die Komponenten (a) bis (c), gemäß einer Ausführungsform (d), und wahlweise (e) werden im allgemeinen in der Schmelze bei Temperaturen zwischen 200 und 320°C, vorzugsweise zwischen 250 und 300°C, insbesondere 280°C, auf Extrudern, Walzen oder Knetern, vorzugsweise einem Zweischneckenextruder bei Verweilzeiten von 0,5 bis 10 Minuten aufgeschmolzen und gemischt. Man kann auch Lösungen der Komponenten (b), (a) und (c) oder Teilmischungen davon herstellen und diese vermischen, die Lösungsmittel anschließend entgasen und die Mischungen gemäß einer Ausführungsform der Erfindung mit dem Verstärkungsmittel (d) und ggf. weiteren Zusatzstoffen (e) abmischen und nochmals konfektionieren. Das Vermischen der Komponenten (a), (b) und (c) erfolgt gemäß dieser Ausführungsform vorzugsweise in Gegenwart bzw. unter Zugabe der Verstärkungsmittel (d). Es ist auch möglich, die Komponente (a) ganz oder teilweise mit mindestens einer anderen Komponente oder dem Verstärkungsmittel (d) vorzumischen.

Ein bevorzugtes Verfahren zur Herstellung der, gemäß einer Ausführungsform der Erfindung verstärkten, thermophastischen Formmassen ist gekennzeichnet dadurch, daß die Komponenten (a), (b), (c), (d) und ggf. (e) in einem Extruder bei 200 bis 320 °C gemischt werden, wobei Komponente (d) mit Komponente (a) beschichtet wird, die beschichtete Komponente (d) in eine Öffnung eines Extruders eingeführt wird und in dem Extruder mit den geschmolzenen Komponenten (b) und (c) und wahlweise (e) vermischt wird.

Die erfindungsgemäße Formmasse wird besonders bevorzugt in folgender Art hergestellt:

Das funktionalisierte Polymer der Komponente (a) wird geschmolzen oder gelöst und direkt auf den Glasfaserstrang des Verstärkungsmittels (d) gegeben bzw. dieser mit der Dispersion oder Lösung getränkt und zusammen mit den Glasfasern in eine Öffnung des Extruders in diesen eingetragen und mit der Schmelze der Komponenten (b) und (c) und wahlweise (e) vereinigt, wobei ggf. das Lösungs- oder Dispersionsmittel verdampft bzw. im Vakuum abgezogen wird.

Erfindungsgemäße Massen können auch durch einen Pultrusionsvorgang hergestellt werden, wie er in der EP-A-56 703 beschrieben ist. Dabei wird der Glasfaserstrang mit der Polymermasse durchtränkt und anschließend abgekühlt und zerkleinert. Die Glasfaserlänge ist in diesem Fall identisch mit der Granulatlänge und liegt zwischen 3 und 20 mm.

Die Verweilzeiten betragen im allgemeinen von 0,5 bis 50 Stunden, vorzugsweise 4 bis 24 Stunden.

Anschließend können aus den Formmassen beispielsweise mittels üblicher Vorrichtungen für das Blasformen, Profilextrusion und Rohrextrusion oder Spritzgießen Formkörper hergestellt werden.

Die so hergestellten thermoplastischen Formmassen haben ein ausgewogenes Eigenschaftsprofil, insbesondere eine sehr gute Reißfähigkeit und Fließfähigkeit bei guter Steifheit, insbesondere bei Verwendung des Verstärkungsmittels (d).

Erfindungsgemäß werden deshalb auch Formkörper, insbesondere Spritzgußformteile, Fasern, Filme oder Folien bestehend im wesentlichen aus den beschriebenen Formmassen, bereitgestellt.

### Thermoplastische Formmassen, Polyamid enthaltend

Die Aufgaben der vorliegenden Erfindung werden durch die in den Ansprüchen beschriebene, gemäß einer Ausführungsform verstärkte, thermoplastische Formmasse gelöst, die Polyamid enthält.

Diese ist gekennzeichnet durch
(a) 0,1 bis 40 Gew.-% mindestens eines funktionalisierten Polymers, wie es in einem der Polymeransprüche definiert ist,
(b) 1 bis 98,9 Gew.-% mindestens eines Polyphenylenethers,
(c) 0 bis 97,9 Gew.-, mindestens eines vinylaromatischen Polymers,
(d) 0 bis 50 Gew.-% mindestens eines Verstärkungsmittels
(e) 0 bis 60 Gew.-% weiterer Zusatzstoffe und/oder Verarbeitungshilfsmittel
   und
(f) 1 bis 98,9 Gew.-% mindestens eines Polyamides,
wobei die Mengen der Komponenten (a) bis (f) gemeinsam 100 Gew.-% ergeben.

Vorzugsweise enthalten diese erfindungsgemäßen thermoplastischen Formmassen 0,2 bis 35 Gew.-%, insbesondere 5 bis 20 Gew.-% der Komponente (a), 1 - 97,9 Gew.-%, besonders bevorzugt 20 - 80 Gew.-%, insbesondere 25 - 50 Gew.-% der Komponente (b), 0 - 50 Gew.-%, insbesondere 0 - 30 Gew.-% der Komponente (c), 1 - 50 Gew.-%, besonders bevorzugt 4 - 45 Gew.-%, insbesondere 10 - 40 Gew.-% der Komponente (d), 1 - 97,9 Gew.-%, besonders bevorzugt 0 - 30 Gew.-%, insbesondere 0 - 20 Gew.-% der Komponente (e) und 1 - 97,9 Gew.-%, besonders bevorzugt 15 - 75 Gew.-%, insbesondere 30 - 60 Gew.-% der Komponente (f).

Dabei ergeben die Mengen der Komponenten (a) bis (f) immer gemeinsam 100 Gew.-%.

Die Komponenten (a) bis (e) sind wie vorstehend beschrieben und werden in den hier angegebenen Mengen eingesetzt.

Die Komponente (f) ist nachstehend näher erläutert.

### Polyamide der Komonente (f)

Polyamide der Komponente (f) können thermoplastische teilkristalline Polyamide sein. Die teilkristallinen Polyamide sind in der Regel linear.

Derartige Polyamide können z.B. durch Kondensation äquimolarer Mengen einer gesättigten Dicarbonsäure mit 4 bis 12 Kohlenstoffatomen mit einem Diamin, welches 4 bis 14 Kohlenstoffatome aufweist oder durch Kondensation von ω-Aminocarbonsäuren oder Polyaddition von Lactamen hergestellt werden.

Beispiele für geeignete Polyamide sind Polyhexamethylenadipinsäureamid, Polyhexamethylenazelainsäureamid, Polyhemmethylensebacinsäureamid, Polyhexamethylendodecandisäureamid, Polytetramethylenadipinsäureamid und die durch Ringöffnung von Lactamen erhaltenen Polyamide wie Polycaprolactam und Polylaurinsäurelactam.

Besonders bevorzugt ist ein Polyamid (f) aus der folgenden Gruppe: Polytetramethylenadipinsäureamid, Polyhexamethylenadipinsäureamid, Polyhexamethylensebacinsäureamid, Polycaprolactam, Copolyamide aus Terephthalsäure, Hexamethylendiamin und ε-Caprolactam, Copolyamide aus Terephthalsäure, Isophthalsäure, Hexamethylendiamin und, wahlweise, Adipinsäure, wobei der Anteil der Terephthalsäure und des Hexamethylendiamins zusammen weniger als 50 Gew-%, bezogen auf das Copolyamid, beträgt. Aus dieser Gruppe sind Polyhexamethylenadipinsäureamid und Polycaprolactam besonders bevorzugt. Dabei können auch Mischungen verschiedener Polyamide verwendet werden.

Bevorzugte thermoplastische Formmassen weisen eine Differenz der NH₂- und COOH-Endgruppen der verwendeten Polyamide kleiner 70 mmol/kg, insbesondere kleiner 40 mmol/kg, auf. Besonders bevorzugt sind Endgruppendifferenzen von 10 bis 30 mmol/kg. Die Bestimmung dieser Werte erfolgt nach bekannten Methoden.

Vorzugsweise werden Polyamide mit einer Viskositätszahl von 40 bis 250 ml/g, insbesondere von 40 bis 150 ml/g, gemessen nach DIN 53426, verwendet.

Die Herstellung niedermolekularer Polyamide oder Polyamid-Präpolymere kann z.B. nach den in den EP 0 129 195, EP 0 129 196 und EP 0 299 444 beschriebenen Verfahren erfolgen. Weitere diskontinuierliche und kontinuierliche Herstellungsverfahren sind dem Fachmann bekannt.

Nach einer bevorzugten Arbeitsweise leitet man das niedermolekulare Polyamid schmelzflüssig durch eine Austragszone unter gleichzeitiger Entfernung des in der Schmelze enthaltenen Restwassers. Geeignete Austragszonen sind beispielsweise Entgasungsextruder. Die so vom Wasser befreite Schmelze wird dann in Stränge gegossen und granuliert. Das erhaltene Granulat wird bei etwa 20°C über seinem Schmelzpunkt (im Falle von Polyhexamethylenadipinsäureamid bei etwa 280°C) bevorzugt in einem Doppelschneckenextruder aufgeschmolzen und mit funktionalisiertem Polymer, dem Polyphenylenether sowie gegebenenfalls dem Kautschuk, den Zusatzstofen oder Verarbeitungshilfsmitteln gemischt, als Strang ausgetragen, gekühlt und granuliert.

Die erfindungsgemäßen thermoplastischen Formmassen, die Polyamid enthalten, können frei sein von vinylaromatischen Polymeren. Gemäß einer Ausführungsform der Erfindung können sie jedoch 0 - 97,9 Gew.-%, vorzugsweise 0 - 50 Gew.-%, insbesondere 0 - 35 Gew.-% mindestens eines vinylaromatischen Polymers Komponente (c) enthalten. Sie können somit Polyphenylenether/Polyamid-Blends oder Polyphenylenether/Polyamid/Vinylaromat-Blends sein.

Die erfindungsgemäßen thermoplastischen Formmassen können nach an sich bekannten Verfahren hergestellt werden, wie es vorstehend für die verstärkten thermoplastischen Formmassen beschrieben ist, außer daß als weitere Komponente (f) jetzt ein Polyamid eingesetzt wird, und auf Komponente (c) verzichtet werden kann gemäß einer Ausführungsform.

Gemäß einer Ausführungsform der Erfindung werden die Komponenten (a) bis (e) vermischt, vorzugsweise in einem Extruder, und Komponente (f) wird danach dem Gemisch der Komponenten (a) bis (e) zudosiert, vorzugsweise in erwärmter Form in einem Seitenextruder. Dabei können die gegebenenfalls vorliegenden Verstärkungsmittel (d), die gegebenenfalls vorbeschichtet sind mit (a) gemäß einer Ausführungsform der Erfindung, dem ersten Gemisch einverleibt werden oder zusammen mit dem Polyamid (f) zudosiert werden.

Die so hergestellten thermoplastischen Formmassen haben ein ausgewogenes Eigenschaftsprofil, insbesondere ein sehr gutes Zähigkeits/Steifigkeits-Verhältnis, insbesondere bei Verwendung des Verstärkungsmittels (d).

Erfindungsgemäß werden auch Formkörper, Fasern, Filme oder Folien aus den thermoplastischen Formmassen bereitgestellt, die nach dem vorstehend beschriebenen Verfahren hergestellt werden können.

Nachstehend wird in den Beispielen die Erfindung anhand von verstärkten Formmassen näher beschrieben.

### BEISPIELE

### Beispiel 1

Die funktionalisierte Styrolpolymer-Komponente (a) wurde mit einem mittleren Polystyrol-Molekulargewicht von 30.000 und Anhydrid-Endgruppe (al) eingesetzt. Eine zweite funktionalisierte Komponente (a) wies ein mittleres Polystyrol-Molekulargewicht von 90.000 und eine Anhydrid-Endgruppe auf (a2). Eine dritte funktionalisierte Komponente (a) Formmasse wies ein mittleres Polystyrol-Molekulargewicht von 30.000 und eine primäre Amin-Endgruppe auf (a3). Die Styrolpolymere wurden wie nachstehend beschrieben hergestellt.

Das Polymer (a1) wurde folgendermaßen hergestellt: 3.200 ml trockenes Cyclohexan und 0,3 ml 1,1-Diphenylethylen wurden in einem inertisierten 6 1 Rührkessel vorgelegt. Sodann wurde 1,5 molare sekundäre Butyllithium-Lösung (in Cyclohexan/Isopentan 92/8), zugegeben, bis eine Rotfärbung bestehen blieb. Danach wurden noch weitere 16 ml der Butyllithiuln-Lösung zugegeben. Anschließend wurden 800 ml hochreines Styrol bei 60 °C innerhalb von 2 Stunden zugetropft. Nach einer weiteren Stunde Nachrühren wurden 7 ml 1,1-Diphenylethylen zugegeben, woraufhin nochmals eine halbe Stunde nachgerührt und schließlich auf 20 °C abgekühlt wurde. In einem weiteren inertisierten 6 l Rührkessel wurden währenddessen 30 g Trimellitsäureanhydridchlorid in 300 ml trockenem Tetrahydrofuran vorgelegt und auf 0 °C abgekühlt. Daraufhin wurde der Inhalt des ersten Rührkessels innerhalb von 1 bis 2 Stunden zugetropft. Nach Ablauf einer Nachreaktionszeit von 1 Stunde wurde das entstandene Styrolpolymer mit Petrolether ausgefällt, abgesaugt und getrocknet. Das so hergestellte Anhydrid-modifizierte Polymer hatte ein mittleres Molekulargewicht (GPC in CHCl₃ gegen Polystyrol-Eichstandards) von 30.000 (Mₙ).

Das Polymer (a2) wurde in derselben Weise hergestellt, jedoch mit 6 statt 16 ml einer 1,5 molaren sekundären Butyllithium-Lösung als Initiator. Das mittlere Molekulargewicht der erhaltenen Styrolpolymere betrug dabei 90.000 (Mₙ)·

Das Polymer (a3) wurde wie für das Polymer (al) hergestellt. Das Produkt wurde in 5 1 Cyclol gelöst. Es wurden sodann 20 g 1,4-Diaminobutan zugegeben und 4 Stunden bei 120 °C gerührt. Nach dem Abkühlen wurde das Produkt in Methanol gefällt, isoliert und getrocknet. Das mittlere Molekulargewicht des so erhaltenen mit einem primären Amin modifizierten Styrolpolymers betrug dabei 30.000 (Mₙ).

Der Funktionalisierungsgrad der funktionalisierten Polymere (al), (a2) und (a3) wurde bestimmt durch ¹H-NMR.

Dabei ergaben sich folgende Funktionalisierungsgrade:
(a1) 94 %
(a2) 90 %
(a3) 96 %

Als Komponente (b) wurde Poly-2,6-dimethyl-1,4-phenylenether mit einer intrinsischen Viskosität von 0,55 dl/g, gemessen in einer Konzentration von etwa 1 Gew.-% in Chloroform bei 25 °C, verwendet.

Als Komponente (c) kamen drei Polystyrole zum Einsatz:
(c1) ist ein schlagfestes Polystyrol KR2756 der BASF AG mit einem Gehalt von 8 Gew.-% Butadien und einem Schmelzindex von 3 g/10 Minuten, gemessen nach DIN 53735 bei 200 °C und 5 kg Last.
(c2) ist ein Standardpolystyrol 148 H der BASF AG mit folgenden Eigenschaften:
   VST/B/50(ISO 306) = 101°C
   MVR 200/5(ISO 1133) = 4,5
(c3) ist ein Copolymerisat aus 95 Gew.-% Styrol und 5 Gew.-% tert.-Butylacrylat mit einer VZ von 1,0 dl/g. Es wurde nach dem in EP-A-0 319 833 für die Komponente B beschriebenen Verfahren hergestellt, vgl. S. 6, Zeile 57 ff.

Als Komponente (d) wurden folgende Glasfasern verwendet:

Als Komponente (dl) wurde eine Schnittglasfaser verwendet, die einen mittleren Faserdurchmesser von 14 ,um und eine Aminosilanschlichte aufwies, beispielsweise erhältlich unter der Bezeichnung OCF®R 44DX2 von Owens Corning Fiberglass Corp.

Als Komponente (d2) wurde die Schnittglasfaser 5145EC14 von Vetrotex International S.A. verwendet, die eine Silanschlichte aufwies.

### Herstellung der Formmassen

Die Komponenten (a), (b), (c) und (d) wurden nach den in Tabelle 1 angegebenen Gewichtsteilen in allen 7 Beispielen auf einem Zweiwellenextruder, der mit 200 U/min lief, konfektioniert. Die Temperatur betrug dabei 280 °C. Die Formmasse wurde nach dem Extrudieren granuliert und schließlich zu den entsprechenden Formkörpern im Spritzgußverfahren bei 280 °C verarbeitet.

Die Fließfähigkeit (melt volume rate, MVR 250 °C/21,6 kg), gemessen nach DIN 53 735, die Reißfestigkeit, gemessen nach DIN 53 455 und das Elastizitätsmodul, gemessen nach DIN 53 457 sind in Tabelle 2 angegeben.

Beispiele 2, 3,4 und 6 betreffen dabei erfindungsgemäß hergestellte verstärkte thermoplastische Formmassen mit einem funktionalisierten Styrolpolymer (a), Beispiele 1, 5 und 7 sind Vergleichsmassen ohne das funktionalisierte Styrolpolymer (a).

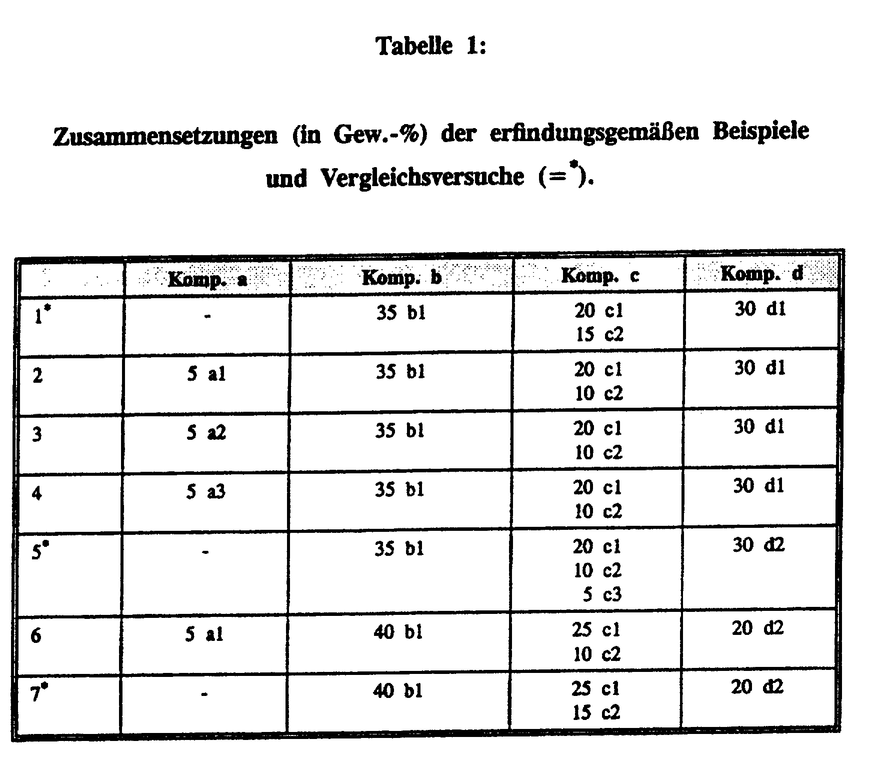

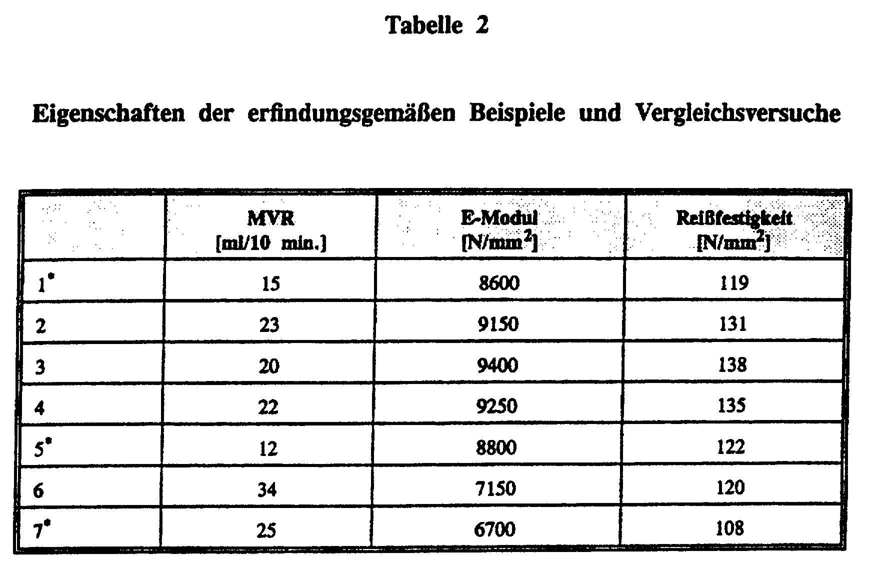

Aus der Tabelle ergibt sich, daß die erfindungsgemäßen verstärkten thermoplastischen Formmassen zugleich hohe Fließfähigkeit, Reißfestigkeit und ein hohes Elastizitätsmodul besitzen, im Gegensatz zu den Vergleichspolymeren, die eine geringe Fließfähigkeit, und verminderte Reißfestigkeit und ein vermindertes Elastizitätsmodul aufweisen.

In den Formmassen gemäß Beispiel 1 bis 5 wurde eine gleiche Zusammensetzung der Komponenten (b) und (d) verwendet, bei den Massen aus Vergleichsbeispiel 1 und 5 wurde der Anteil der Komponente (c) um den Anteil erhöht, der in den erfindungsgemäßen Massen gemäß Beispiel 2 bis 4 die Komponente (d) ausmacht. Es wurde also das funktionalisierte Polystyrol durch das schlagzähe Polystyrol in Vergleichsbeispiel 1 und durch ein Styrolcopolymerisat in Vergleichsbeispiel 5 ersetzt. Aus den in Tabelle 2 angegebenen Eigenschaften der Massen zeigt sich, daß die erfindungsgemäßen Massen gemäß Beispiel 2 bis 4 eine gegenüber den Massen der Vergleichsbeispiele 1 und 5 erheblich verbesserte Fließfähigkeit aufweisen bei ebenfalls deutlich verbessertem Elastizitätsmodul und verbesserter Reißfestigkeit.

Eine andere Zusammensetzung der Komponenten (b) und (d) wurde in den Massen gemäß Beispiel 6 und 7 verwendet, wobei in Beispiel 6 das erfindungsgemäße funktionalisierte Polystyrol der Komponente (a) verwendet wurde, in der Masse gemäß Vergleichsbeispiel 7 hingegen wiederum eine entsprechend vergrößerte Menge der Komponente (c). Aus den in Tabelle 2 gezeigten Ergebnissen wird deutlich, daß die erfindungsgemäße Formmasse größere Werte sowohl für die Fließfähigkeit, den Elastizitätsmodul als auch die Reißfestigkeit aufweist.

Die Eigenschaften der erfindungsgemäßen Formmassen sind somit den Eigenschaften der Vergleichsmassen entsprechend dem Stand der Technik deutlich überlegen.

### Beispiel 2

Zu Vergleichszwecken wurde gemäß dem von Park, Barlow und Paul beschriebenen direkten Funktionalisierungsverfahren eine funktionalisierte Styrolpolymer-Komponente (a4) hergestellt. Dieses Vergleichspolymer wies die nachstehenden Eigenschaften auf:

| Endgruppe | Trimellitsäureanhydrid; |
|---|---|
| Polystyrol-Molekulargewicht | 30.000; |
| Funktionalisierungsgrad | 63 % |

Der Funktionalisierungsgrad wurde durch ¹H-NMR-Spektroskopie bestimmt, wie bei Park, Barlow und Paul beschrieben.

### Herstellung der Formmasssen

Die Komponenten (a), (b), (c) und (c), wie sie vorstehend oder in Beispiel 1 angegeben sind, wurden nach den in Tabelle 3 angegebenen Gewichtsteilen hergestellt, wie in Beispiel 1 beschrieben.

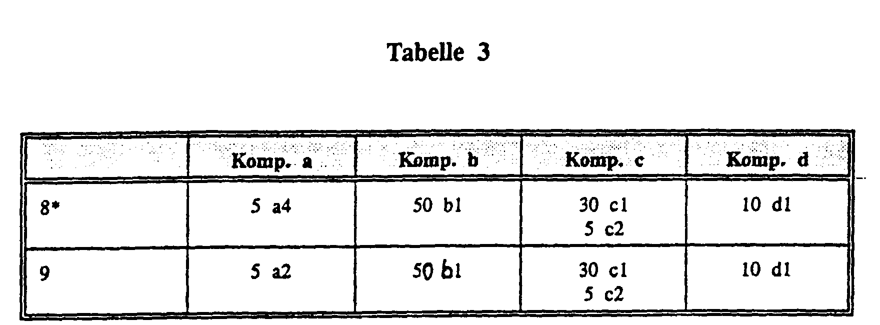

Die Fließfähigkeit, die Reißfestigkeit und das Elastizitätsmodul wurden wie in Beispiel 1 angegeben bestimmt und sind in Tabelle 4 angegeben.

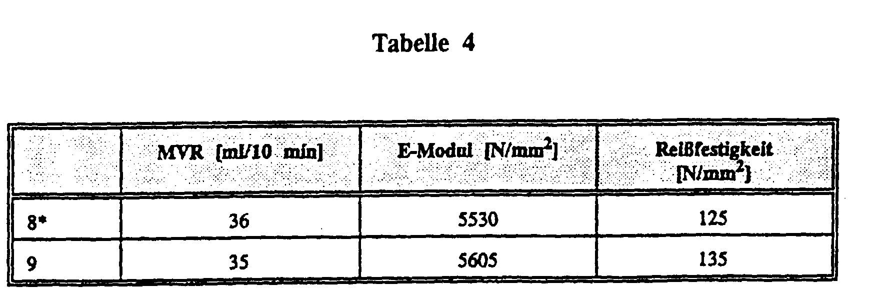

Aus der Tabelle ergibt sich, daß die erfindungsgemäß verstärkte thermoplastische Formmasse im Vergleich zu der entsprechenden Formmasse, die mit dem gemäß dem Stand der Technik direkt funktionalisierten Polystyrol hergestellt wurde, eine sehr ähnliche Fließfähigkeit aufweist, wobei die Reißfestigkeit und das Elastizitätsmodul größer sind als bei der Vergleichsmischung.

### Beispiel 3

Zu Vergleichszwecken wurden gemäß dem von Park, Barlow und Paul beschriebenen indirekten Funktionalisierungsverfahren unter Verwendung von Ethylenoxid funktionalisierte Styrolpolymer-Komponenten (a) hergestellt. Diese Vergleichspolymere der funktionalisierten Styrolpolymer-Komponente (a) wiesen die nachstehenden Eigenschaften auf:

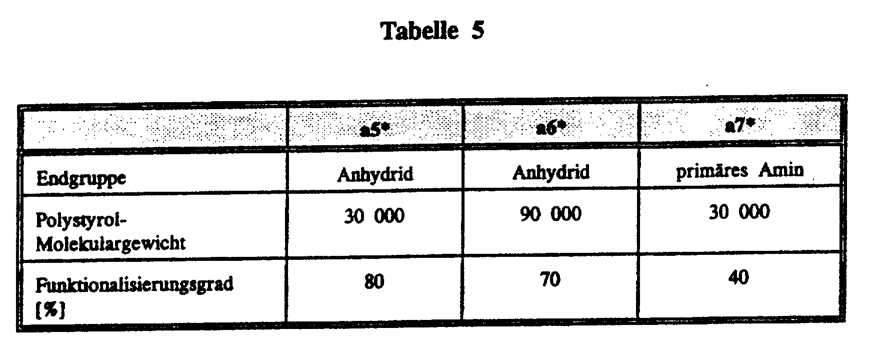

Als Anhydridgruppe wurde dabei Trimellitsäureanhydrid verwendet. Als primäres Amin wurde 1,4-Diaminobutan zur Synthese verwendet.

Der Funktionalisierungsgrad wurde bestimmt mittels ¹H-NMR-Spektroskopie, wie sie bei Park, Barlow und Paul beschrieben ist.

### Herstellung der Formmassen

Die Komponenten (a), (b), (c) und (d), wie sie vorstehend oder in Beispiel 1 angegeben sind, wurden nach den in Tabelle 6 angegebenen Gewichtsteilen hergestellt, wie in Beispiel 1 beschrieben.

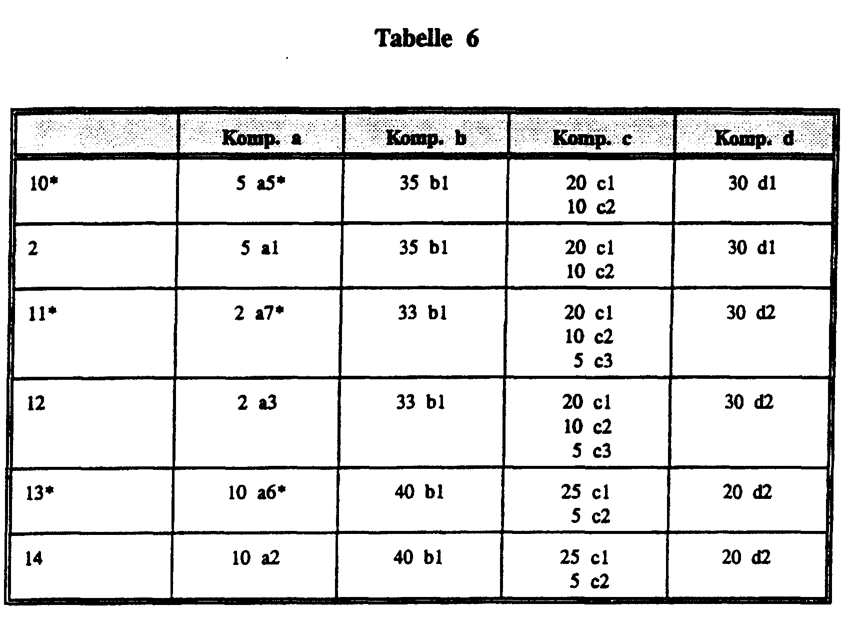

Die Fließfähigkeit, die Reißfestigkeit und das Elastizitätsmodul wurden wie in Beispiel 1 angegeben bestimmt und sind in Tabelle 7 angegeben.

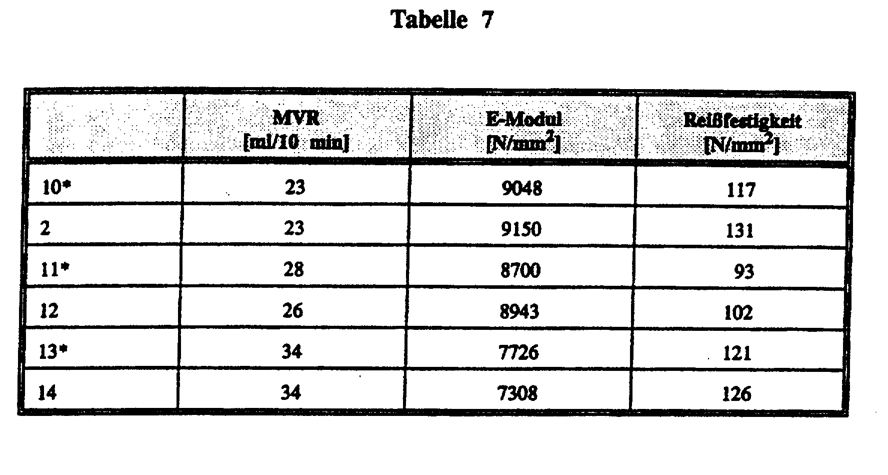

Aus der Tabelle ergibt sich, daß die erfindungsgemäßen verstärkten thermoplastischen Formmassen im Vergleich zu den entsprechenden Formmassen, die mit den gemäß dem Stand der Technik indirekt funktionalisierten Polystyrolen hergestellt wurden, eine gleiche oder sehr ähnliche Fließfähigkeit aufweisen, wobei die Reißfestigkeit und das Elastizitätsmodul größer sind als bei den Vergleichsmischungen.

## Patentansprüche

1. Verfahren zur Herstellung eines funktionalisierten Polymers der Formel:
A-Z-X
wobei
A einen Block aus vinylaromatischen Monomeren mit 8 bis 20, vorzugsweise 8 bis 12 Kohlenstoffatomen,
Z einen Grundbaustein einer Verbindung mit sterisch hindernden Gruppen und
X einen mit einer endständigen Säureanhydridgruppe funktionalisierten Grundbaustein
bedeutet,
wobei der Funktionalisierungsgrad des Polymers mindestens 65% beträgt, wobei
a) vinylaromatische Monomere anionisch zu einem ersten lebenden einen Block A enthaltenden Polymer der Formel A⁻ polymerisiert werden,
b) das erste lebende Polymer mit einer Verbindung mit sterisch hindernden Gruppen zu einem zweiten lebenden Polymer der Formel A-Z^{⊖} umgesetzt wird und
c) das zweite lebende Polymer mit einer funktionellen Gruppe einer mindestens difunktionellen Verbindung zu einem Polymer der Formel A-Z-X umgesetzt wird.

2. Verfahren nach Anspruch 1 mit folgenden Merkmalen
- A bedeutet einen Block aus Styrol und/oder α-Methylstyrol,
- Z bedeutet einen Grundbaustein der Formel 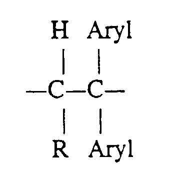 wobei R einen Kohlenwasserstoffrest, vorzugsweise einen Alkylrest mit 1 bis 4 Kohlenstofatomen, oder Wasserstoff, und "Aryl" einen Arylrest mit 6 bis 10 Kohlenstoffatomen bedeutet.

3. Funktionalisiertes Polymer der Formel:
A-Z-X
wobei
A einen Block aus vinylaromatischen Monomeren mit 8 bis 20, Vorzugsweise 8 bis 12 Kohlenstoffatomen,
Z einen Grundbaustein der Formel 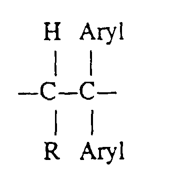 wobei R einen Kohlenwasserstoffrest, vorzugsweise einen Alkylrest mit 1 bis 4 Kohlenstoffatomen, oder Wasserstoff, und "Aryl" einen Arylrest mit 6 bis 10 Kohlenstoffatomen bedeutet und
X einen mit einer endständigen Säureanhydridgruppe funktionalisierten Grundbaustein
bedeutet,
wobei der Funktionalisierungsgrad des Polymers mindestens 90% beträgt.

4. Funktionalisiertes Polymer nach Anspruch 3, in dem A einen Block aus Styrol und/oder α-Methylstyrol bedeutet.

5. Verwendung eines funktionalisierten Polymers gemäß Anspruch 3 oder 4 zur Herstellung von, gegebenenfalls verstärkten, thermoplastischen Formmassen.

6. Thermoplastische Formmassen, enthaltend
(a) 0,1 bis 20 Gew.-% mindestens eines funktionalisierten Polymers, wie es in Anspruch 3 oder 4 definiert ist,
(b) 1 bis 98,9 Gew.-% mindestens eines Polyphenylenethers,
(c) 1 bis 98,9 Gew.-% mindestens eines vinylaromatischen Polymers,
(d) 0 bis 50 Gew.-% mindestens eines Verstärkungsmittels, und
(e) 0 bis 60 Gew.-% weiterer Zusatzstoffe und/oder Verarbeitungshilfsmittel,
wobei die Mengen der Komponenten (a) bis (e) gemeinsam 100 Gew.-% ergeben.

7. Verfahren zur Herstellung von, gegebenenfalls verstärkten, thermoplastischen Formmassen gemäß Anspruch 6, wobei die Komponenten (a), (b), (c), (d) und (e), sofern vorhanden, in einem Extruder bei 200 bis 320 °C gemischt werden, wobei gegebenenfalls Komponente (d) mit Komponente (a) beschichtet wird, die beschichtete Komponente (d) in eine Öffnung eines Extruders eingeführt wird und in dem Extruder mit den geschmolzenen Komponenten (b) und (c) und wahlweise (e) vermischt wird.

8. Thermoplastische Formmassen, enthaltend
(a) 0,1 bis 40 Gew.-% mindestens eines funktionalisierten Polymers, wie es in Anspruch 3 oder 4 definiert ist,
(b) 1 bis 98,9 Gew.-% mindestens eines Polyphenylenethers,
(c) 0 bis 97,9 Gew.-% mindestens eines vinylaromatischen Polymers,
(d) 0 bis 50 Gew.-% mindestens eines Verstärkungsmittels, und
(e) 0 bis 60 Gew.-% weiterer Zusatzstoffe und/oder Verarbeitungshilfsmittel und
(f) 1 bis 98,9 Gew.-% mindestens eines Polyamides,
wobei die Mengen der Komponenten (a) bis (f) gemeinsam 100 Gew.-% ergeben.

9. Verfahren zur Herstellung von, gegebenenfalls verstärkten, thermoplastischen Formmassen gemäß Anspruch 8, wobei die Komponenten (a), (b), (c), (d), (e) und (f), sofern vorhanden, in einem Extruder bei 200 bis 320°C gemischt werden, wobei Komponente (f) in einer Öffnung eines Extruders eingeführt wird und in dem Extruder mit den geschmolzenen Komponenten (a), (b), (c), (e) vermischt wird, wobei Komponente (d) mit Komponente (f) und/oder mit Komponente (a), (b), (c) und (e) vermischt sein kann.

10. Verwendung von thermoplastischen Formmassen gemäß Anspruch 6 und/oder 8 zur Herstellung von Formkörpern, Fasern oder Folien.

11. Formkörper, Fasern oder Folien, umfassend Formmassen gemäß Anspruch 6 und/oder 8.

## Claims

1. A process for the preparation of a functionalized polymer of the formula
A-Z-X
where
A is a block of vinylaromatic monomers of 8 to 20, preferably 8 to 12, carbon atoms,
Z is a basic building block comprising a compound having sterically hindering groups and
X is a basic building block functionalized by a terminal acid anhydride group,
wherein the degree of functionalization of the polymer is at least 65%, wherein
a) vinylaromatic monomers are subjected to anionic polymerization to give a first living polymer of the formula A containing a block A,
b) the first living polymer is reacted with a compound having sterically hindering groups to give a second living polymer of the formula A-Z^{⊖} and
c) the second living polymer is reacted with a functional group of a difunctional or polyfunctional compound to give a polymer of the formula A-Z-X.

2. A process as claimed in claim 1 having the following features
- A is a block of styrene and/or α-methylstyrene,
- Z is a basic building block of the formula 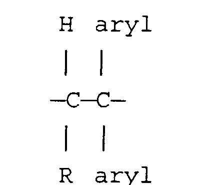 where R is a hydrocarbon radical, preferably alkyl of 1 to 4 carbon atoms, or hydrogen and aryl is aryl of 6 to 10 carbon atoms.

3. A functionalized polymer of the formula
A-Z-X
where
A is a block of vinylaromatic monomers of 8 to 20, preferably 8 to 12, carbon atoms,
Z is a basic building block of the formula 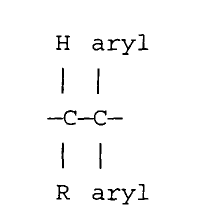 where R is a hydrocarbon radical, preferably alkyl of 1 to 4 carbon atoms, or hydrogen and aryl is aryl of 6 to 10 carbon atoms and
X is a basic building block functionalized by a terminal acid anhydride group,
where the degree of functionalization of the polymer is at least 90%.

4. A functionalized polymer as claimed in claim 3, in which A is a block of styrene and/or α-methylstyrene.

5. The use of a functionalized polymer as claimed in claim 3 or 4 for the preparation of unreinforced or reinforced, thermoplastic molding materials.

6. A thermoplastic molding material containing
(a) from 0.1 to 20% by weight of at least one functionalized polymer, as defined in claim 3 or 4,
(b) from 1 to 98.9% by weight of at least one polyphenylene ether,
(c) from 1 to 98.9% by weight of at least one vinylaromatic polymer,
(d) from 0 to 50% by weight of at least one reinforcing agent and
(e) from 0 to 60% by weight of further additives and/or processing assistants,
the amounts of the components (a) to (e) together summing to 100% by weight.

7. A process for the preparation of an unreinforced or reinforced, thermoplastic molding material as claimed in claim 6, wherein the components (a), (b), (c), (d) and (e), if present, are mixed in an extruder at from 200 to 320°C, if required component (d) being coated with component (a) and the coated component (d) being introduced into an orifice of an extruder and being mixed in the extruder with the molten components (b) and (c) and, if desired, (e).

8. A thermoplastic molding material containing
(a) from 0.1 to 40% by weight of at least one functionalized polymer, as defined in claim 3 or 4,
(b) from 1 to 98.9% by weight of at least one polyphenylene ether,
(c) from 0 to 97.9% by weight of at least one vinylaromatic polymer,
(d) from 0 to 50% by weight of at least one reinforcing agent,
(e) from 0 to 60% by weight of further additives and/or processing assistants and
(f) from 1 to 98.9% by weight of at least one polyamide,
the amounts of the components (a) to (f) together summing to 100% by weight.

9. A process for the preparation of an unreinforced or reinforced, thermoplastic molding material as claimed in claim 8, wherein the components (a), (b), (c), (d), (e) and (f), if present, are mixed in an extruder at from 200 to 320°C, component (f) being introduced into an orifice of an extruder and being mixed in the extruder with the molten components (a), (b), (c) and (e) and it being possible to mix component (d) with component (f) and/or with components (a), (b), (c) and (e).

10. The use of a thermoplastic molding material as claimed in claim 6 and/or 8 for the production of moldings, fibers or films.

11. A molding, fiber or film comprising a molding material as claimed in claim 6 and/or 8.

## Revendications

1. Procédé de préparation d'un polymère fonctionnalisé de la formule:
A-Z-X
dans laquelle
A représente un bloc de monomères vinylaromatiques comportant de 8 à 20, de préférence de 8 à 12 atomes de carbone,
Z représente un élément constitutif fondamental d'un composé comportant des groupes à empêchement stérique, et
X représente un élément constitutif fondamental fonctionnalisé comportant un groupe terminal d'anhydride d'acide,
le degré de fonctionnalisation du polymère étant d'au moins 65%, caractérisé en ce que
a) des monomères vinylaromatiques sont polymérisés par voie anionique en un premier polymère vivant contenant un bloc A de la formule A⁻,
b) le premier polymère vivant est converti au moyen d'un composé comportant des groupes à empêchement stérique en un deuxième polymère vivant de la formule A - Z^{ψ}, et
c) le deuxième polymère vivant réagit avec un groupe fonctionnel d'un composé au moins bifonctionnel pour former un polymère de la formule A - Z - X.

2. Procédé selon la revendication 1, caractérisé en ce que:
- A représente un bloc de styrène ou d'α-méthylstyrène,
- Z représente un élément constitutif fondamental de la formule 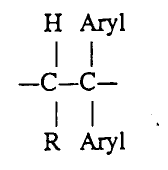 dans laquelle R représente un radical hydrocarbure, de préférence un radical alkyle comportant de 1 à 4 atomes de carbone, ou l'hydrogène, et "aryle" représente un radical aryle comportant de 6 à 10 atomes de carbone.

3. Polymère fonctionnalisé de la formule A-Z-X, dans laquelle
A représente un bloc de monomères vinylaromatiques comportant de 8 à 20, de préférence de 8 à 12 atomes de carbone,
z représente un élément constitutif fondamental de la formule 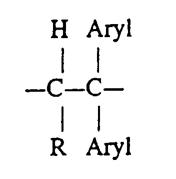 dans laquelle
R représente un radical hydrocarbure, de préférence un radical alkyle comportant de 1 à 4 atomes de carbone ou de l'hydrogène, et "aryle" représente un radical aryle comportant de 6 à 10 atomes de carbone et
X représente un élément constitutif fondamental fonctionnalisé avec des groupes terminaux d'anhydride d'acide
le degré de fonctionnalisation du polymère étant d'au moins 90%.

4. Polymère fonctionnalisé selon la revendication 3, dans lequel A représente un bloc styrène et/ou α-méthylstyrène.

5. Utilisation du polymère fonctionnalisé selon la revendication 3 ou 4 pour la préparation de masses de moulage thermoplastiques éventuellement renforcées.

6. Masses de moulage thermoplastiques, contenant
(a) de 0,1 à 20% en poids d'au moins un polymère fonctionnalisé, tel que défini aux revendications 3 ou 4,
(b) de 1 à 98,9% en poids d'au moins un poly(éther de phénylène),
(c) de 1 à 98,9% en poids d'au moins un polymère vinylaromatique,
(d) de 0 à 50% en poids d'un agent de renforcement, et
(e) de 0 à 60% en poids d'autres additifs et/ou auxiliaires de mise en oeuvre ,
les quantités des composants (a) à (e) totalisant ensemble 100% en poids.

7. Procédé de préparation de masses de moulage thermoplastiques éventuellement renforcées selon la revendication 6, caractérisé en ce que les composants (a), (b), (c), (d) et (e), s'ils sont présents, sont mélangés dans une extrudeuse à 200 à 320°C, le composant (d) étant éventuellement enrobé du composant (a), le composant (d) enrobé est introduit dans une ouverture d'une extrudeuse et mélangé dans l'extrudeuse aux composants (b) et (c) et éventuellement (e) fondus.

8. Masses de moulage thermoplastiques, contenant
(a) de 0,1 à 40% en poids d'au moins un polymère fonctionnalisé, tel que défini aux revendications 3 ou 4,
(b) de 1 à 98,9% en poids d'au moins un poly(éther de phénylène),
(c) de 0 à 97,9% en poids d'au moins un polymère vinylaromatique,
(d) de 0 à 50% en poids d'un agent de renforcement, et
(e) de 0 à 60% en poids d'autres additifs et/ou auxiliaires de mise en oeuvre et
(f) de 1 à 98,9% en poids d'au moins un polyamide,
les quantités des composants (a) à (f) totalisant ensemble 100% en poids.

9. Procédé de préparation de masses à mouler thermoplastiques éventuellement renforcées selon la revendication 8, caractérisé en ce que les composants (a), (b), (c), (d), (e) et (f), lorsqu'ils sont présents, sont mélangés dans une extrudeuse à une température de 200 à 320°C, le composant (f) étant introduit dans une ouverture d'une extrudeuse, et mélangés dans l'extrudeuse aux composants (a), (b), (c), (e) à l'état fondu, le composant (d) pouvant être mélangé au composant (f) et/ou aux composants (a), (b), (c) et (e).

10. Utilisation de masses de moulage thermoplastiques selon la revendication 6 et/ou 8 pour la production d'articles façonnés, de fibres ou de feuilles.

11. Articles façonnés, fibres ou feuilles comportant des masses de moulage selon les revendications 6 et/ou 8.
